(19) Europäisches Patentamt
European Patent Office
Office européen des brevets

(11) **EP 3 824 607 B1**

(12) **EUROPEAN PATENT SPECIFICATION**

(45) Date of publication and mention
of the grant of the patent:
**30.08.2023 Bulletin 2023/35**

(21) Application number: **19742361.9**

(22) Date of filing: **19.07.2019**

(51) International Patent Classification (IPC):
**H04L 27/26** (2006.01)   **H04W 52/02** (2009.01)

(52) Cooperative Patent Classification (CPC):
**H04L 27/2602; H04L 27/2603; H04L 27/2614;
H04L 27/2634; H04W 52/0229;** Y02D 30/70

(86) International application number:
**PCT/EP2019/069468**

(87) International publication number:
**WO 2020/016397 (23.01.2020 Gazette 2020/04)**

(54) **A METHOD AND A DEVICE TO GENERATE AN AMPLITUDE-BASED MODULATION WIRELESS SIGNAL USING OFDM TO BE RECEIVED BY A LOW-POWER NON-COHERENT RECEIVER**

VERFAHREN UND VORRICHTUNG ZUR ERZEUGUNG EINES AMPLITUENBASIERTEN DRAHTLOSEN MODULATIONSSIGNALS UNTER VERWENDUNG VON OFDM ZUR REZEPTION BEI EINEM NICHT KOHÄRENTEN EMPFÄNGER MIT NIEDRIGER LEISTUNG

PROCÉDÉ ET DISPOSITIF PERMETTANT DE GÉNÉRER UN SIGNAL SANS FIL DE MODULATION À BASE D'AMPLITUDE EN UTILISANT L'OFDM POUR ÊTRE REÇU PAR UN RÉCEPTEUR NON COHERENT DE FAIBLE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.07.2018 EP 18382547**

(43) Date of publication of application:
**26.05.2021 Bulletin 2021/21**

(73) Proprietor: **Universitat Politècnica de Catalunya**
**08034 Barcelona (ES)**

(72) Inventors:
• **CERVIÀ CABALLÉ, Martí**
**08241 Manresa (ES)**
• **PARADELLS ASPAS, José**
**08025 Barcelona (ES)**
• **CALVERAS AUGÉ, Anna Maria**
**08024 Barcelona (ES)**
• **LÓPEZ AGUILERA, Maria Elena**
**08940 Cornellà de Llobregat (ES)**

• **GARCIA VILLEGAS, Eduardo**
**08028 Barcelona (ES)**
• **DEMIRKOL, Ilker Seyfettin**
**08014 Barcelona (ES)**

(74) Representative: **Segui Quetglas, Margalida et al
Torner, Juncosa i Associats, S.L.
C/Pau Claris, 108, 1r 1a
08009 Barcelona (ES)**

(56) References cited:
• **XIAOFEI WANG (INTERDIGITAL): "On the Coexistence of 802.11ax and 802.11ba Signals", IEEE DRAFT;
11-17-0659-03-00BA-ON-THE-COEXISTENCE-OF-8 02-11AX-AND-802-11BA-SIGNALS, IEEE-SA MENTOR, PISCATAWAY, NJ USA , vol. 802.11ba, no. 3 11 May 2017 (2017-05-11), pages 1-21, XP068115849, Retrieved from the Internet: URL:https://mentor.ieee.org/802.11/dcn/17/11-17-0659-03-00ba-on-the-coexistence-of-8 02-11ax-and-802-11ba-signals.pptx [retrieved on 2017-05-11]**

**Description**

Technical Field

The present invention is directed, in general, to wireless communications. In particular, the invention relates to a method and to a device to generate an amplitude-based modulation wireless signal using OFDM to be received by a low-power non-coherent receiver.

Background of the invention

Devices compliant with the IEEE 802.11 family of specifications are pervasive, with over 9.5 billion installed devices, as of 2018. Infrastructure for IEEE 802.11 devices is also extensive, with 50 million Wi-Fi networks in the US alone. With this adoption rate, IEEE 802.11 could become a suitable solution for many Internet of Things (IoT) applications. However, the power consumption of IEEE 802.11 devices is too high for most IoT based use cases, where the devices are energy constrained, powered through either batteries or power harvesting. Consequently, Power Saving Mode (PSM) was presented in the original IEEE 802.11 specification and improved in subsequent IEEE 802.11 releases. PSM periodically toggles the device radio, keeping it off most of the time, reducing idle listening time, and with it, power consumption.
The length of the sleep periods ranges from several beacon intervals (in the original IEEE 802.11 specification), up to several years (using IEEE 802.11 ah). To avoid losing frames sent to sleeping stations, the Access Point (AP) of the network stores any frame directed to a sleeping station (STA). These stored frames are then fetched by the STA at the time of its scheduled wake-up. PSM is effective in reducing idle listening time but introduces latency, as communication with an STA has to wait for its scheduled wake-up. This generates a trade-off between reducing the power consumption due to idle listening time and increasing latency. Due to this trade-off, PSM is not efficient for traffic profiles consisting of short but frequent frame transmissions. These situations require short sleep cycles, where the STA spends a significant portion of time checking with its AP for received frames.
A Wake-up Radio (WuR) enabled device uses a secondary radio receiver to detect asynchronous wake-up requests. This secondary radio's power consumption is low enough to allow for its continuous operation. WuR does not suffer from any efficiency vs. latency trade-off since the sleeping stations can be woken up on demand. Moreover, it presents lower energy consumption than some of the most used duty-cycling schemes, as shown in the literature [1].
Due to the growing interest on WuR, IEEE started standardization efforts with the aim of incorporating it into the IEEE 802.11 specification. This standardization process is, at the moment of writing, under development for the forthcoming IEEE 802.11ba specification [2]. The main feature of IEEE 802.11ba is that the IEEE 802.11 radio is used as a Wake-up transmitter (WuTx). The purpose of the WuTx is to transmit Wake-up Signals (WuS), which are used to wake up sleeping IEEE 802.11ba stations (STAs). The WuS is modulated using On-Off Keying (OOK), a digital amplitude based modulation. OOK uses two amplitude levels as symbols: the first symbol presents a low amplitude, as close as possible to zero, and represents the "0" logic value, the second symbol presents a high amplitude level, representing the "1" logic value. However, legacy IEEE 802.11 Orthogonal Frequency Division Modulation (OFDM) Physical (PHY) specification does not support the transmission of OFDM symbols with very low transmitted constant amplitude, and, as a consequence, legacy IEEE 802.11 devices are incapable of generating the low amplitude OOK symbol reliably. To sort this obstacle, IEEE 802.11ba proposes a modified IEEE 802.11 OFDM PHY transmitter capable of transmitting OFDM symbols with close to zero amplitude, thus, allowing for "0" OOK symbol transmission. As a result of these modifications, the transmitters of existing, and already deployed, IEEE 802.11 devices cannot generate the WuS defined by IEEE 802.11ba. Backward compatibility with legacy transmitters is important to maintain the interoperability between legacy IEEE 802.11 devices and the new IEEE 802.11ba enabled devices. Without backward compatibility, a legacy device is incapable of interacting directly with a sleeping IEEE 802.11ba device, as it cannot send the WuS required for its wake-up.

WAKE-UP RADIO SYSTEMS:

WuR is one of the many techniques used to reduce the power consumption of wireless communication devices. Most of these techniques try to maintain the device radio powered off and only turn it on when a message needs to be transmitted or received. Doing so reduces the duty cycle of the device radio and minimizes power consumption.
However, there is a need for a coordination mechanism. Devices need to toggle their radios in a coordinated manner to maintain communications among them. Such a mechanism is referred to as *rendez-vous* scheme and determines the method used to coordinate the wake-up of devices in the network.
Three categories of *rendez-vous* schemes are explained in [3]:

1) Purely synchronous:

Nodes are synchronized to wake up at a certain time interval. Additional protocol overhead is usually required to maintain the synchronization as well as low drift clocks, which are not available on feature-limited nodes. One example of this category would be PSM mode of IEEE 802.11, where a sleeping STA has a rendez-vous with its AP after a pre-defined number of beacon intervals.

2) Purely Asynchronous:

Nodes can wake up other nodes on demand. This scheme requires additional hardware (i.e. a secondary, low-power radio) to receive the wake-up requests from other devices. The current WuR implementation of IEEE 802.11ba is an example of a system implementing this scheme. Stations compatible with IEEE 802.11ba use a low-power secondary radio to receive wake-up requests from other IEEE 802.11ba devices.

3) Pseudo-asynchronous:

Nodes wake up periodically but not synchronously. A node can wake up another node on demand by synchronizing a transmission with the wake-up cycle of the other node. This scheme consumes additional power due to the multiple retries required due to the, generally, poor synchronization among nodes. One example of this scheme is Contikimac [4]. On Contikimac, every device wakes up periodically and checks the medium for frame transmissions.

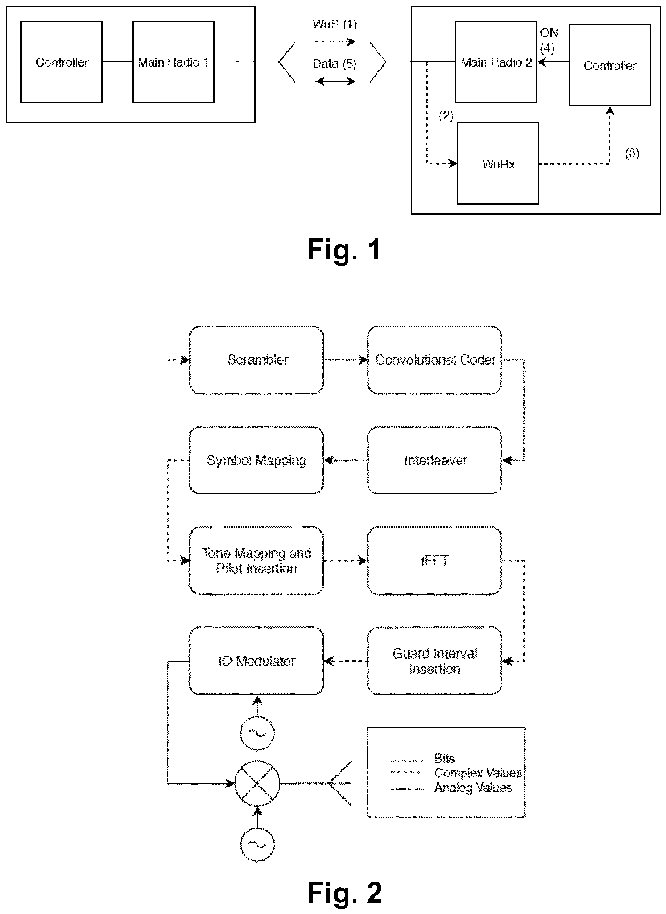

WuR is an implementation of a purely asynchronous rendez-vous scheme. In WuR systems, devices turn off their main radio but keep a secondary low power radio active. This secondary radio, the WuRx, is used to receive a WuS that causes the device to wake up its main radio. The WuTx of the initiator node generates the WuS. This WuTx can be the main radio of the device, as on IEEE 802.11ba. Fig. 1 shows a simple diagram of a WuR rendez-vous. The rendez-vous on WuR occurs in the following manner: 1) the initiator device uses its WuTx to send a WuS to the target sleeping device; 2) the target device receives the WuS with its WuRx and, upon successful reception, 3) wakes its main radio from sleep; finally, 4) the main radios of both devices are active and the rendez-vous has occurred. Now, radio communication using the main radios of both devices can start. The power consumption of the WuRx must be low enough, in the order of several $\mu$W, making it possible to keep the WuRx listening continuously for a WuS. Therefore, a recurring approach discussed widely in the related literature for WuR is the use of signals that encode data using only amplitude, which can be decoded with mostly passive receiver designs. These amplitude-based waveforms can be used to create simple digital modulations such as OOK, which is prominent in the literature [5].

IEEE 802.11 STANDARDS AND WAKE-UP RADIO:

To the best of our knowledge, there are six WuR solutions concerning IEEE 802.11 presented in the literature [6]-[11], and the WuR system still in development within TGba [2]. In relation to how they use IEEE 802.11 signals to generate the symbols that form the WuS, they can be classified into two categories: systems that use sequences of standard IEEE 802.11 frames to generate the WuS; and systems that encode the WuS symbols by using IEEE 802.11 OFDM PHY symbols.

The first type of systems uses IEEE 802.11 frames or frame sequences as symbols. These systems send, at most, one symbol per IEEE 802.11 frame. On the WuR systems studied, the information is encoded using the length [6] or the presence of IEEE 802.11 frames [7]. The WuTx for these systems can be implemented using only software, by using either a low-level Application Programming Interface (API) provided by the device, or with the socket API provided by most operating systems. Both options provide a way to send raw IEEE 802.11 frames with arbitrary length and, in most cases, on arbitrary intervals. An example of this type of systems is the one presented in [7], which generates an OOK signal modulated with a synthetic 15 KHz carrier. This carrier is created by sending IEEE 802.11 frames at a 15 KHz rate. The presence of this carrier is required by the low power bit decoder used to decode the signal. The system achieves a 1 kbps data rate. Another system that uses IEEE 802.11 at frame level is the one devised in [6]. The WuTx encodes binary data using the length of IEEE 802.11 frames, which are then decoded by an envelope detector and a simple counter circuit. The main drawback of this type of systems is that, as they operate at the frame level, their achievable bit rate is low, as it is capped by the frame rate of the IEEE 802.11 transmitter.

The second type of IEEE 802.11 WuR devices encodes binary data using the OFDM symbols of IEEE 802.11 OFDM PHY. This type of system can achieve higher data rates. For example, the symbol rate for IEEE OFDM PHY is 250 kBd using the most widely supported symbol period of 4$\mu$s. The achievable bit rate for this case is a multiple of 250 kbps, depending on the number of bits per symbol. These systems need to manipulate the waveforms generated by the OFDM symbols in order to generate a signal recoverable by relatively simple WuRx. IEEE 802.11 PHY specifications describe a complex transceiver architecture that incorporates: scrambling, coding, interleaving, pilot tone addition, guard intervals and other mechanisms added to increase performance and reliability. The effect of all these mechanisms on the output waveform must be also taken into account. A system using IEEE 802.11 OFDM PHY to produce an imperfect OOK modulation is described in [8]. It achieves a reasonable modulation depth, limited by the amplitude differences of the symbols pertaining to IEEE 802.11ah 256-QAM constellation. However, authors only evaluate an implementation of the WuTx based on software-defined radio. Different from a software defined radio, direct access to IQ samples is not supported by any off the-shelf IEEE 802.11 device, thus, making this solution not valid for legacy IEEE 802.11 devices. In [9], a WuR system is proposed with the transmission of modified IEEE 802.11 OFDM symbols, grouping subcarriers in different sets and forcing some of them to zero in the frequency domain. However, its implementation is unfeasible in IEEE 802.11 devices. In [10], OOK modulated data is incorporated into a single IEEE 802.11 frame, but IEEE 802.11 transmitters need a firmware update. In [11], a partial-OOK signal is generated through fixing to zero some specific samples in the frequency domain corresponding to pre-defined intervals in the time domain. While, similar to our invention, this approach is compatible with current IEEE 802.11n/ac/ax OFDM transmitters, it would require modifications at the PHY layer, thus making this proposal unfeasible for most of IEEE 802.11 devices. The current IEEE 802.11ba specification also operates at OFDM symbol level and uses OOK. However, it is not compatible with legacy devices. The most recent IEEE 802.11ba draft contemplates two different signal modulations based on OOK: one achieving a rate of 250 kbps, and another one getting a slower rate of 62.5 kbps [2]. The faster 250 kbps modulation uses a Manchester code composed by two 2 $\mu$s pulses per bit, and the slower 62.5 kbps modulation uses a Manchester code with repetition, using four pulses with 4 $\mu$s duration, obtaining a bit duration of 16 $\mu$s. These pulses are built using OFDM, but only include a subset of the available carriers to reduce bandwidth and to create a pulse with a more rectangular shape (cf. Annex AC in [2]).

An OFDM transmitter is a flexible radio that can create complex waveforms from digital data. OFDM can be used, with the right inputs, to generate amplitude-based waveforms that can be decoded by simple and low power receivers [8]. IEEE 802.11 OFDM PHY appeared firstly on IEEE 802.11a, published in 1999 to operate at the 5 GHz ISM band. Afterwards, in 2003, IEEE 802.11g was published, which extended OFDM PHY for operation in the 2.4 GHz ISM band. IEEE 802.11 OFDM PHY data rates were improved subsequently with IEEE 802.11n High-Throughput (HT) in 2009 and again with IEEE 802.11ac Very High Throughput (VHT) published in 2013. However, IEEE 802.11 OFDM PHY is not able to generate good quality OOK signals.

The main challenge for creating an OOK modulation using IEEE 802.11 OFDM PHY is achieving sufficient extinction ratios. The extinction ratio, in OOK, is the relation between the amplitude of the "0" symbol and the amplitude of the "1" symbol. A greater extinction ratio signifies that "0" symbols are further away in the constellation from the "1" symbols, reducing the probability of errors in symbol detection. There are two procedures of the IEEE 802.11 OFDM PHY that add power to the OFDM symbol, regardless of the bits being transmitted. The first is the integration of four high amplitude pilot tones to each OFDM symbol. The second is Symbol Mapping, which does not include any symbol with zero amplitude in the constellations supported by IEEE 802.11 OFDM PHY [12]. Both of these processes add amplitude to the "0" OOK symbols that can be generated with IEEE 802.11 OFDM PHY, reducing the achievable extinction ratio. Since the generation of OOK modulations with good extinction ratios is impossible using legacy IEEE 802.11 OFDM PHY, an alternative modulation needs to be devised. Such alternative would enable the generation of an amplitude based signal capable of bearing digital information using an unmodified IEEE 802.11 OFDM PHY transmitter.

There are known some patent applications in the field.

US 2018184379-A1 proposes the transmission of multiple WuS (multi-user wake-up) in different sub-channels, thus using FDMA, with wake-up signals modulated through OOK method. US 2018184435-A1 claims the usage of wake-up radio for the use case of a device changing from a serving access point to a candidate access point, employing IEEE 802.11 standard and OOK modulation. US 2018183905-A1 elaborates a WuS employing OOK modulation through the transmission of OFDMA signals (bit 1) interspersed with silence periods (bit 0). None of these patent applications proposes WuS generation through amplitude-based modulation using a single OFDM signal as in the present invention.

US 2018184378-A1 uses the transmission of OFDMA symbols as bit value 1 and the absence (nulls) as bit value 0, thus obtaining an OFDMA signal with OOK modulation, with the sequence representing a WuS. Unlike in the present invention, US 2018184378-A1 does not specify the concrete mechanisms for OOK generation inside an OFDM signal.

Finally, [13] introduces a narrow band sequence-based on-off keying (OOK) scheme with waveform coding (WFC) which allows coexistence with 802.11ax transmissions without interference between the two signals and increases the WUR coverage range. The proposed OOK scheme is orthogonal to 11ax OFDM symbols. Numerical analysis shows that the proposed scheme enables concurrent WUS and 802.11ax data transmission without adjacent interference. WFC OOK symbols are generated based on sequences in frequency domain. Thus, according to the authors, with this method the OOK symbol energy is localized in frequency, enabling WUR to capture more OOK symbol energy.

All the above patent applications disclose mechanisms that benefit from the utilization of OFDMA to generate one or multiple OOK-modulated WuS, while the present invention does not use OFDMA and generates a Peak-Flat modulation without altering the OFDM block structure, capable of transmitting any information (not only WuS).

References

[1] J. Oller, I. Demirkol, J. Casademont, J. Paradells, G. U. Gamm, and L. Reindl, "Wake-up radio as an energy-efficient alternative to conventional wireless sensor networks mac protocols," in Proceedings of the 16th ACM International Conference on Modeling, Analysis & Simulation of Wireless and Mobile Systems, ser. MSWiM '13. New York, NY, USA: ACM, 2013, pp. 173-180. [Online]. Available: http://doi.acm.org.recursos.biblioteca.upc.edu/10.1145/2507924.2507955

[2] IEEE Draft Standard for Information Technology-Telecommunications and Information Exchange Between Systems Local and Metropolitan Area Networks-Specific Requirements Part 11: Wireless LAN Medium Access Control (MAC) and Physical Layer (PHY) Specifications Amendment: Wake-Up Radio Operation, IEEE Standard P802.11ba/D3.0, May 2019.

[3] E.-Y. Lin, J. M. Rabaey, and A. Wolisz, "Power-efficient rendez-vous schemes for dense wireless sensor networks," in Communications, 2004 IEEE International Conference on, vol. 7. IEEE, 2004, pp. 3769-3776.

[4] A. Dunkels, "The contikimac radio duty cycling protocol," 2011.

[5] M. Magno, V. Jelicic, B. Srbinovski, V. Bilas, E. Popovici, and L. Benini, "Design, implementation, and performance evaluation of a flexible low latency nanowatt wake-up radio receiver," IEEE Transactions on Industrial Informatics, vol. 12, no. 2, pp. 633-644, 2016.

[6] Y. Kondo, H. Yomo, S. Tang, M. Iwai, T. Tanaka, H. Tsutsui, and S. Obana, "Wake-up radio using IEEE 802.11 frame length modulation for radio-on demand wireless LAN," in Personal Indoor and Mobile Radio Communications (PtMRC), 2011 IEEE 22nd International Symposium on. IEEE, 2011, pp. 869-873.

[7] J. Oller, E. Garcia, E. Lopez, I. Demirkol, J. Casademont, J. Paradells, U. Gamm, and L. Reindl, "Ieee 802.11-enabled wake-up radio system: Design and performance evaluation," Electronics Letters, vol. 50, no. 20, pp. 1484-1486, 2014.

[8] H. Zhang, C. Li, S. Chen, X. Tan, N. Yan, and H. Min, "A low-power ofdm-based wake-up mechanism for ioe applications," IEEE Transactions on Circuits and Systems II: Express Briefs, vol. 65, no. 2, pp. 181-185, 2018.

[9] F. Hutu, A. Khoumeri, G. Villemaud, and J. M. Gorce, "Wake-up Radio Architecture for Home Wireless Networks," in Proc. of IEEE Radio and Wireless Symposium, 2014.

[10] E. Alpman, A. Khairi, R. Dorrance, M. Park, and V. Somayazulu, "802.11g/n Compliant Fully Integrated Wake-up Receiver with -72dBm Sensitivity in 14nm FinFET CMOS," IEEE Journal of Solid-State Circuits, vol. 53, no. 5, pp. 1411-1422, May 2018.

[11] L. R. Wilhelmsson and M. M. Lopez, "Spectrum Efficient Support of IEEE 802.11ba in an IEEE 802.11ax Network," 2019 IEEE 89th Vehicular Technology Conference (VTC2019-Spring), Kuala Lumpur, Malaysia, 2019, pp. 1-5.

[12] IEEE Standard for Information Technology-Telecommunications and Information Exchange Between Systems Local and Metropolitan Area Networks-Specific Requirements Part 11: Wireless LAN Medium Access Control (MAC) and Physical Layer (PHY) Specifications, IEEE Standard 802.11-2016 (Revision of IEEE Std. 802.11-2012), December 2016.

[13] A. Sahin, R. Yang, X. Wang, H. Lou, F. La Sita, "On the Coexistence of 802.11ax and 802.11ba Signals", doc. IEEE802.11-17/0659r1, May 2017.

Brief Description of the Invention

Aiming to get a solution for IEEE 802.11, which can be low latency and low power, present invention is proposed. With the proposed invention, a legacy IEEE 802.11 transmitter (or transmitters of other OFDM-based radio technologies such as LTE) can be used to generate an amplitude-based modulated wireless signal using OFDM to send data to other low-power non-coherent receivers. In an example of application, this feature would enable the IEEE 802.11 radio to operate as a Wake-up Transmitter.

To that end, according to a first aspect, a method is proposed comprising generating, by a transmitter, for example a legacy IEEE 802.11 transmitter, the amplitude-based modulated wireless signal having Peak and Flat OFDM Symbols to be transmitted to at least one low-power non-coherent receiver through a radio interface by coding binary data generating a given bit sequence using an OFDM block structure. The given bit sequence is uniform and is pre-scrambled before being introduced to the OFDM block structure using the same bit sequence that a Scrambler of the OFDM block structure will generate, has a length equal to the length of a payload OFDM symbol according to the given communication standard, and is aligned with OFDM symbol boundaries of the communication standard, so that the entire bit sequence is encoded jointly in the same OFDM symbol. Likewise, the amplitude-based modulated wireless signal having Peak and Flat OFDM Symbols is generated using a Peak to Average Power Ratio, PAPR, of the OFDM symbols to encode information, the Peak Symbols presenting a higher PAPR than the Flat Symbols.

In an embodiment, the OFDM block structure comprises:

i) adding a pseudo-random sequence, known by the transmitter and the receiver, to the binary data, providing a pseudo-random sequence binary data;

ii) encoding the pseudo-random sequence binary data using a given coding rate;

iii) separating the encoded pseudo-random sequence binary data into different blocks of bits and interleaving its content;

iv) transforming each block of bits into an OFDM symbol by:

converting binary values from the bit block into complex symbols using a given constellation, forming a symbol block;

adding four maximum amplitude symbols;

padding with "0" symbols the symbol block, increasing the size thereof;

applying an Inverse Fast Fourier Transform to the symbol block; and

prepending a cyclic prefix to a time domain symbol; and

v) transforming the OFDM symbols into an analog domain.

According to the proposed method, said constellation can comprise BPSK, QPSK, 16-QAM, 64-QAM, 256-QAM or 1024-QAM.

In an embodiment, the constellation comprises BPSK. In this case, the method further comprises using, for a BPSK having a symbol value "-1" with a coding rate of ½ using as the given bit sequence a uniform sequence of 24 "0" bits to generate the Peak Symbol, wherein the given bit sequence is pre-scrambled before being introduced to the block structure, generating a uniform symbol block with all subcarriers modulated to "-1".

In another embodiment, the constellation comprises 64-QAM. In this case, the method further comprises using, for a 64-QAM having a symbol value "-7 -7j" with a coding rate of 3/4 using as the given bit sequence a uniform sequence of 216 "0" bits to generate the Peak Symbol, wherein the given bit sequence is pre-scrambled before being introduced to the block structure, generating a uniform symbol block with all subcarriers modulated to "-7 -7j".

Present invention also proposes, according to another aspect, a device comprising a transmitter to generate an amplitude-based modulated wireless signal based on OFDM to be received by a low-power non-coherent receiver. The transmitter comprises means (or a module/unit/element) to generate the amplitude-based modulated wireless signal having Peak and Flat OFDM symbols by coding binary data generating a given bit sequence using an OFDM block structure compliant with a given communication standard, the given bit sequence being uniform and being pre-scrambled before being introduced to the OFDM block structure using the same bit sequence that a Scrambler of the OFDM block structure will generate, having a length equal to the length of a payload OFDM symbol according to the given communication standard, and being aligned with OFDM symbol boundaries of the communication standard, so that the entire bit sequence is encoded jointly in the same OFDM symbol, and the amplitude-based modulated wireless signal having Peak and Flat OFDM Symbols being generated using a Peak to Average Power Ratio, PAPR, of the OFDM symbols to encode information, the Peak Symbols presenting a higher PAPR than the Flat Symbols. The transmitter also comprises means (or a module/unit/element) to transmit the generated amplitude-based modulated wireless signal to at least one low-power non-coherent receiver.

Brief Description of the Drawings

The previous and other advantages and features will be better understood from the following detailed description of embodiments, with reference to the attached figures, which must be considered in an illustrative and non-limiting manner, in which:

Fig. 1 is a diagram explaining the operation of a WuR system according to the state of the art, where the main radio is also the WuTx. According to the figure: 1. WuS is emitted by device 1 main radio; 2. WuS is received by device 2 WuRx; 3. The WuRx wakes up device 2 controller; 4. Device 2 controller wakes up its main radio; 5. Rendez-vous occurs, devices 1 and 2 can now communicate.

Fig. 2 is an embodiment of an IEEE 802.11g/a OFDM PHY block structure for the data path. This block structure is also applicable to IEEE 802.11n/ac OFDM symbol generation. However, spatial multiplexing has to be taken into account.

Fig. 3 illustrates the amplitude of Peak Symbol subcarriers in frequency domain, defined in (1).

Fig. 4 illustrates the amplitude of the ideal Peak Symbol in time domain described in (2). Note that after Guard Interval addition, the peak is delayed. Fig. 4A shows the amplitude before Guard Interval insertion, and Fig. 4B shows the amplitude of the OFDM symbol after Guard Interval insertion.

Fig. 5 schematically shows the scrambler used in IEEE 802.11 PHY, as described in [12].

Fig. 6 schematically shows the convolutional coder used in IEEE 802.11 PHY. Note that for each bit input, two outputs, Data A and Data B are generated. Each $T_b$ block represents one bit delay [12].

Fig. 7 illustrates the amplitude of best case non-ideal Peak Symbols. Fig. 7A shows the amplitude of the Peak Symbol using BPSK symbol -1 and Fig. 7B shows the amplitude of the Peak Symbol using 64-QAM symbol -7 -7j.

Fig. 8 illustrates the amplitude of the Flat Symbol generated by the binary sequence presented in (17). Note that its maximum amplitude is significantly lower than the peak of its respective Peak Symbol presented in Fig. 7A. Fig. 8A is the amplitude of the Flat Symbol using pilot tones with mostly positive phase and Fig. 8B is the amplitude of the Flat Symbol using pilot tones with mostly negative phase.

Fig. 9 shows an example of an IEEE 802.11 frame structure of the proposed invention for the specific case of BPSK and coding rate 1/2.

Fig. 10 illustrates the actual generated WuS, encoding the binary value "0101010101010101010" with Peak symbols representing a logic "0" and Flat Symbols a logic "1".

Fig. 11 illustrates a structure of the proposed WuRx. Fig. 12 illustrates a structure of the proposed bit decoder based on OOK reception.

Fig. 13 illustrates a structure of the proposed bit decoder based on a peak detection.

Fig. 14 illustrates a diagram of the signal processing chain used for BER simulation in AWGN channel.

Fig. 15 illustrates BER vs SNR using various modulations for AWGN channel.

Fig. 16 illustrates a diagram of the signal processing chain used for TGn Ch.B PER simulation.

Fig. 17 illustrates PER vs SNR using various modulations for TGn Ch.B.

Detailed Description of Preferred Embodiments

The present invention provides a Wake-up Radio system solution, alternative to IEEE 802.11ba, which features a Wake-up Transmitter (WuTx) based on the legacy IEEE 802.11 OFDM PHY specification. This WuTx uses the IEEE 802.11 OFDM PHY transmitter to produce an amplitude-based modulation. This modulation, which achieves a bit rate of 250 kbps, can be received using low power non-coherent receivers, such as envelope detectors. The proposed modulation uses the average signal Peak to Average Power Ratio (PAPR) of the symbol to encode information. This modulation has been termed Peak-Flat modulation in this document. Peak-Flat modulation is composed of two different symbols, a Peak Symbol that presents a very high PAPR and a Flat Symbol, with a reduced PAPR. A software-based method to generate the waveforms for the Peak-Flat modulation on a standard IEEE 802.11g transmitter is also proposed. The method proposed is also compatible with IEEE 802.11a and can be applied with minor modifications to IEEE 802.11n/ac. A Proof of Concept (PoC) implementation of the WuTx, based on the proposed method is evaluated on a detailed MATLAB WLAN Toolbox simulation, which provides simulation functions compliant with the IEEE 802.11 standard. Two possible Wake-up Receiver (WuRx) architectures capable of decoding the Peak-Flat modulation are explained. Both architectures are based on simple and passive envelope detectors. One of them is a basic OOK receiver and the other is a peak detector. Finally, a PoC for the complete WuR system is presented, using detailed simulations on both MATLAB WLAN Toolbox and Simulink. The performance of this PoC is evaluated using its Bit Error Ratio (BER) vs. the Signal to Noise Ratio (SNR) with AWGN. To put in context the performance of Peak-Flat modulation proposed in this WuR system, other state-of-the-art modulations used in WuR: an OOK modulation with 4 μs symbols and IEEE 802.11ba fast data rate are considered. The OOK receiver implemented on the PoC is used as the reference receiver for the evaluation. Choosing BER vs SNR as the figure of merit allowed to compare directly the performance of several modulations, without having to provide physical implementations of the receivers. Results show that the performance of the Peak-Flat modulation on the peak detector based receiver achieves a BER of $10^{-3}$ at 3.5 dB of SNR. This result makes it slightly better performing than IEEE 802.11ba fast data rate and OOK that achieve the same sensitivity at 4.5 dB and 5.5 dB, respectively, on the OOK receiver.

With reference to Fig. 2, therein it is illustrated a preferred embodiment of the block structure architecture following IEEE 802.11 OFDM PHY for generating the amplitude-based wireless signal based on OFDM to be received by low-power non-coherent receivers. It should be noted that although the preferred embodiment is illustrated taking into account the IEEE 802.11g standard, present invention can be implemented on other wireless communication standards using OFDM such as IEEE 802.11a, 802.11n, 802.11ac or even LTE.

For ease of understanding, the IEEE 802.11g OFDM PHY has been divided into several functional blocks. The first IEEE 802.11 OFDM PHY block, the Scrambler, adds a pseudo-random sequence, known by both receiver and transmitter, to the binary data at the input, also referred to as bitstream. Randomization of the entry bitstream decreases the probability of systematic errors, reduces the bias on reception and, finally, aids in reducing the PAPR. The output of the Scrambler block is encoded on the Convolutional Coder block, using a coding rate between 1/2 and 3/4. Once coded, the resulting bitstream is separated into blocks of bits and their contents are interleaved by the Interleaver block. Interleaving reduces the likelihood of error bursts and improves the effectiveness of the convolutional code. Subsequent blocks, i.e., from Symbol Mapping to IQ Modulation, perform the transformation of the bit block into an OFDM symbol. Firstly, the Symbol Mapping block converts the binary values from the bit block into complex symbols, using one of the available constellations: BPSK, QPSK, 16-QAM or 64-QAM, or even 256-QAM or 1024-QAM. The Interleaver output bit block results in a block containing 48 symbols. Afterwards, four maximum amplitude symbols are added through the Tone Mapping and Pilot insertion block. Pilot tone addition increments the number of symbols in the block from 48 to 52. Each of the symbols contained in the symbol block, also named subcarrier or tone, represents one of the samples of the OFDM symbol in the frequency domain. Next, the 52 subcarriers are padded with "0" symbols, increasing the size of the symbol block to 64 samples. Later, the symbol block is sent to the Inverse Fast Fourier Transform (IFFT) block, which applies to it a 64 point IFFT. The output of the IFFT block is a sequence of 64 time domain data samples, which are the values of the OFDM symbol in the time domain. Finally, the cyclic prefix is prepended to the 64 sample time domain symbol in the Guard Interval Insertion block. The cyclic prefix, which compromises the last 16 samples of the time domain OFDM symbol, is added in order to mitigate the effect of multipath propagation on the OFDM symbol and keep inter-carrier interference low. Thus, the final OFDM symbol consists then of a total of 80 samples, which are sent to the IQ Modulator block. The modulator transforms the samples of the OFDM symbol into the analog domain at a rate of 20 Msps. The final OFDM symbol is an analog waveform 4 μs long. Subsequently, the generated OFDM symbol is sent through the RF front end.

To study the available waveforms with IEEE 802.11 OFDM PHY, a simulation of the last stages of IEEE 802.11 OFDM PHY transmitter (i.e. from Symbol Mapping to Guard Interval Insertion) was developed. As the simulation is comprised by only several blocks of the complete IEEE 802.11OFDM PHY pipeline, the MATLAB WLAN Toolbox did not provide the facilities for its implementation. The simulation framework was implemented using MATLAB standard library functions. The correctness of this simulation framework was validated by comparison with the output waveforms obtained with MATLAB WLAN Toolbox on equivalent inputs.

As pure OOK signals were discarded due to the impossibility of generating reasonable "0" symbols with close to null amplitude, other types of waveforms were considered. Using the simulation framework developed, the investigation focused on symbol blocks that produced OFDM symbols with pronounced peaks. The presence of one peak concentrates the symbol energy on a very narrow temporal interval, achieving a very high PAPR. Using this type of signaling, two possible symbols can be derived: one with a very high PAPR, henceforth referred to as Peak Symbol and another with a very low PAPR, referred to as Flat Symbol. This peak-flat modulation deviates greatly from the usual OFDM symbols used in IEEE 802.11 OFDM PHY, which are constructed with mechanisms devised to limit their PAPR. This deviation can introduce problems, such as clipping. The power amplifier of the transmitter can saturate, as it might not have the dynamic range required to reproduce the peak, producing a visible clipping on the peak regions. This would make Peak Symbols more difficult to detect, as their PAPR would be reduced.

Following, two receiver alternatives that can be used for peak-flat modulation are explained: the first receiver is based on a peak detector circuit that discriminates between the Peak and Flat Symbols based on the presence of significant peaks on the waveform; and the other is a standard OOK receiver. Peak Symbols, outside of the peak region, have a lower level envelope compared to regular OFDM symbols, as most of their energy is concentrated at the peak. Therefore, at an OOK receiver with ideal sampling times, the peak-flat modulation is received as an OOK modulation with imperfect extinction ratio. This receiver is especially interesting as its performance is unaffected by the clipping suffered by the Peak Symbols. Both of these receiver alternatives are detailed in following sections.

Following sections introduce the methodology for the generation of such signals on the IEEE 802.11 OFDM PHY using data bits from higher layers, according to an embodiment.

GENERATION OF THE PEAK SYMBOL

In order to generate symbols with highest possible PAPR, firstly, the properties of Fourier Transform need to be studied. The discrete version of the Fourier Transform, the Discrete Fourier Transform (DFT), is of key relevance to OFDM. The Inverse DFT (IDFT) transforms the symbol block derived from the bitstream into the OFDM symbol that is sent through the radio interface. DFT, and its inverse, share many properties with their analog counterpart, the Fourier Transform. One of them is frequency scaling, relating the temporal signal length with its transform signal length in the frequency domain, and vice versa. This fact shows that signal expansion in the frequency domain leads to signal contraction in the time domain. This is shown in Property 1 of the Inverse Fourier Transform.

Property 1: Expanding a signal $X(\omega)$ in frequency by a factor of a, compresses it in time by a factor of a.

$$F^{-1}\left[ X\left( \frac{f}{a} \right) \right] = ax(at)$$

Proof: Let $u = \frac{f}{a}$ where a > 1 is the scaling factor.

$$F^{-1}\left[X\left(\frac{f}{a}\right)\right] = \int_{-\infty}^{\infty} X\left(\frac{f}{a}\right) e^{j2\pi ft} df =$$

$$\int_{-\infty}^{\infty} X(u) e^{j2\pi tau} d(au) = ax(at)$$

The relationship between this property and PAPR is: generation of a wide constant pulse in the frequency domain leads to a very narrow waveform in the time domain, being most of its energy contained on a very narrow temporal region, i.e. a peak.

A. IDEAL PEAK SYMBOL

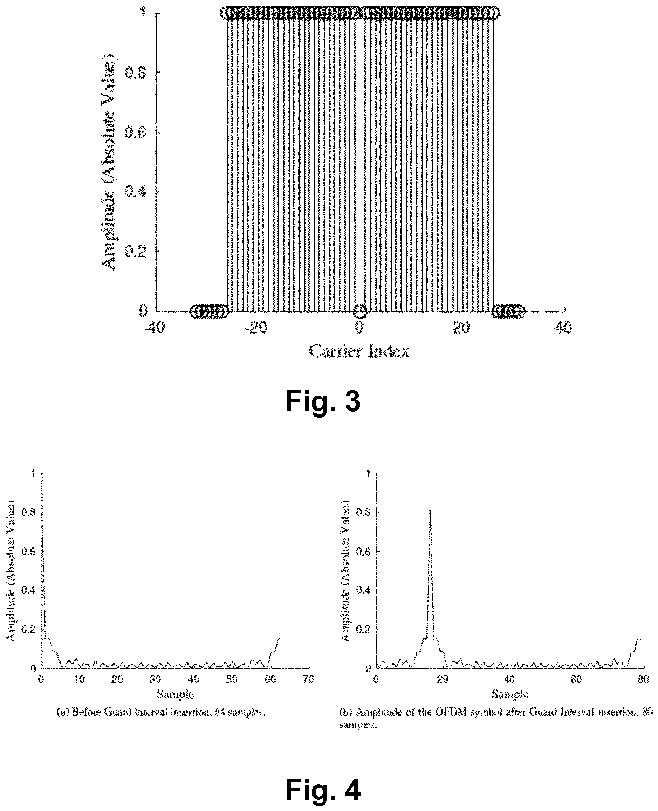

With the aforementioned relationship in mind, the conclusion is to use the widest possible constant waveform in the frequency domain. This waveform should include only samples of constant value. In OFDM, the closest implementation is a uniform symbol block. This block is formed by assigning the same value to all the available OFDM subcarriers. The resulting symbol block for IEEE 802.11g is described mathematically in (1), where $k$ represents the subcarrier index, and shown in Fig. 3. This ideal result does not include the effects of pilot tone addition. IEEE 802.11g specifies that the subcarrier with index 0 and the subcarriers that belong to the ranges going from -27 to -32 and from 26 to 31 are set to 0.

$$X[k] = \begin{cases} 0 & k < -26 \\ 1 & -26 \le k < 0 \\ 0 & k = 0 \\ 1 & 0 < k \le 26 \\ 0 & k > 26 \end{cases} \quad (1)$$

The ideal OFDM symbol is the result of a 64 point IFFT to the 64 sample sequence generated by (1). In the time domain, the symbol adopts the expression of (2), where $n$ corresponds to the sample index, which goes from 0 to 63. A plot based on (2) is shown in Fig. 4A. The IEEE 802.11g OFDM PHY adds a guard interval of 16 samples to the OFDM symbol. The values of the OFDM symbol during this guard interval, or cyclic prefix, consist of a repetition of the last 16 samples of the OFDM symbol. The resulting OFDM symbol with guard interval is 80 samples long and is shown in Fig. 4B. This OFDM symbol, which presents the highest PAPR attainable is the Peak Symbol.

$$x[n] = \frac{1}{64} \frac{\sin(2\pi\frac{53}{64}n)}{\sin(2\pi\frac{1}{64}n)} - 1 \quad (2)$$

Ideally, the Peak Symbol can be produced by any uniform symbol block regardless of the complex value used to initialize all 52 samples. All possible constellation symbol values supported by IEEE 802.11g OFDM PHY produce a waveform with the same shape and PAPR, although, with different scale factors.

The implementation of the Peak Symbol devised on this section using a complete IEEE 802.11 OFDM PHY presents an important challenge. The access to the symbol mapping stage, which produces the symbol block, is not supported in any commercial IEEE 802.11 transmitter implementation. For this reason, the uniform symbol block required for the generation of the Peak Symbol must be realized using the input bitstream at the beginning of the data path presented in Fig. 2.

Next, the solutions taken in order to build the Peak Symbol from the bitstream at the input of the IEEE 802.11 OFDM PHY data path are presented.

B. ADDRESSING THE EFFECT OF THE SCRAMBLER BLOCK

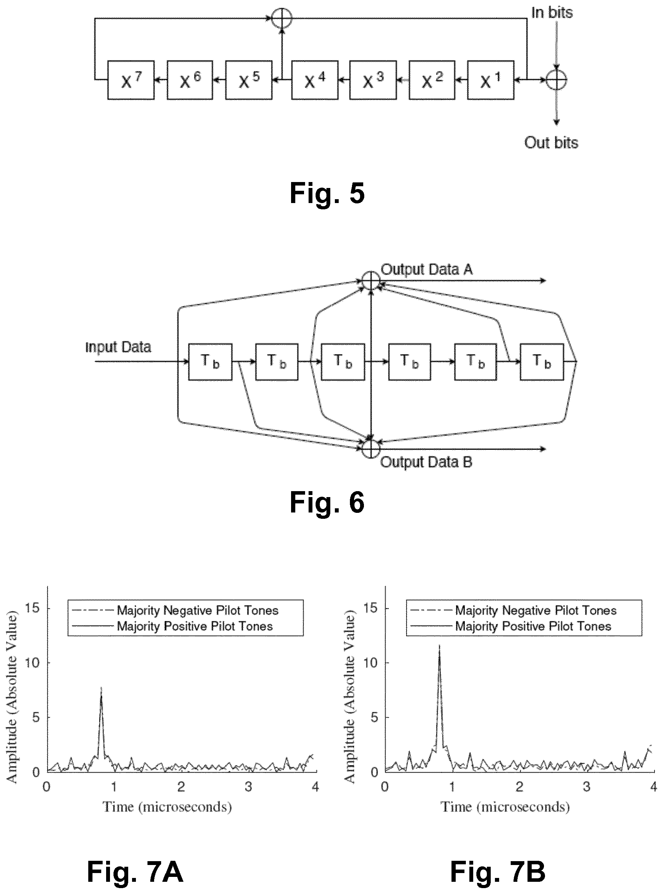

The first block of the IEEE 802.11 OFDM PHY data path is the Scrambler. Its purpose is to randomize the input bitstream in order to avoid long runs of "0" or "1". Randomization minimizes both the average PAPR of OFDM symbols and the DC bias at the reception. The IEEE 802.11 scrambler is preferably implemented using a Linear Feedback Shift Register (LFSR) with the characteristic polynomial found in (3). An example of the Scrambler is shown in Fig. 5.

$$S[x] = 1 + x^4 + x^7 \qquad\qquad (3)$$

The standard specification determines that the seed used to initialize the LFSR must change at the start of each frame transmission. To generate the Peak Symbol, a controlled bit sequence is required at the output of the Scrambler. Therefore, the randomization introduced by the scrambler must be compensated for. If the initialization seed to be used by the Scrambler is known, the effect of the Scrambler can be cancelled. This can be done by scrambling the input bitstream in advance, using the same bit sequence that the Scrambler will generate. The proof of this solution can be seen in (4)-(7). $x_0[n]$ consists in the intended bit sequence at the output of the scrambler, $y_0[n]$ the pseudorandom bit sequence generated by the Scrambler, $x_1[n]$ the sequence at the input of the Scrambler, and finally, $y_1[n]$ the output sequence of the Scrambler.

$$x_1[n] = y_0[n] \oplus x_0[n] \qquad\qquad (4)$$

$$y_1[n] = x_1[n] \oplus y_0[n] \qquad\qquad (5)$$

$$y_1[n] = x_0[n] \oplus y_0[n] \oplus y_0[n] \qquad\qquad (6)$$

$$y[n] = x_0[n] \qquad\qquad (7)$$

In this way, if the Scrambler initialization seed is known in advance any bit sequence can be generated at the output of the Scrambler.

## C. ADDRESSING THE EFFECT OF THE CONVOLUTIONAL CODER BLOCK

The Convolutional Coder block encodes the data with a Forward Error Correcting (FEC) code. The convolutional coder used presents the common parameters, where $r$ represents the coding rate, $k$ is the window length, and $g_0$ and $g_1$ are the generator polynomials, all defined in Table 1. The coder, shown in Fig. 6, generates two output bits for every input bit and has a memory of 6 bits. The coding rate is by default 1/2, additional coding rates of 2/3 and 3/4 are obtained from the same convolutional coder structure by using Puncturing. Puncturing removes bits from the output of the coder. These bits are introduced again in the receiver, before the decoder block, as "0" values. This technique reduces the redundancy at the expense of reducing the capability to recover from errors. The use of the convolutional coder is required at all data rates supported on IEEE 802.11g/a. On following releases, the presence of a convolutional coder on the device is still a requirement. In this way, the solution presented here is compatible with IEEE 802.11n/ac.

Table 1. Parameters of the convolutional coder used in IEEE 802.11 OFDM PHY

| Symbol | Value |
|---|---|
| $r$ | 2 |
| $k$ | 7 |
| $g_0$ | $133_8$ |
| $g_1$ | $171_8$ |

For the purpose of having a certain sequence of bits at the input of the symbol mapping stage, the Convolutional Coder is the most challenging block to work with. Not every bit sequence is possible at the output, due to the effect of coding and the redundancies added. However, there are two input bit sequences that are not modified by the addition of coding and, hence, are equal at the output, only multiplied in size by the inverse of the coding rate used.
The first bit sequence is a uniform input sequence of "0" bits, which results on another uniform output sequence of "0" bits, but grown in size, i.e., a sequence of 50 "0" at the input, coded with a rate of 1/2, results in a sequence of 100 "0" at the output. As shown in (8)-(11), for each "0" at the input, two "0" are obtained at the output.

$$s[n] = \{0, 0, 0, 0, 0, 0\} \qquad\qquad (8)$$

$$x = 0 \qquad\qquad (9)$$

$$y_a = x \oplus s[2] \oplus s[3] \oplus s[5] \oplus s[6] = 0 \oplus 0 \oplus 0 \oplus 0 \oplus 0 \qquad (10)$$

$$y_b = x \oplus s[1] \oplus s[2] \oplus s[3] \oplus s[6] = 0 \oplus 0 \oplus 0 \oplus 0 \oplus 0 \qquad (11)$$

where $x$ represents the input bit, $s[n]$, the 6-bit wide scrambler state, $y_a$ the data A output of the coder, obtained by applying $g_0$ to x, and finally, $y_b$ the data B output, generated in a similar way by $g_1$. Both data A and data B outputs are shown in Fig. 6.

Another interesting input sequence consists in the binary inverse of the former, i.e., all bits set to "1". If the coder state bits are also set all to "1", the output for this sequence is a uniform "1" sequence, with its length multiplied by the inverse of the coding rate. The number of XOR operations in both branches of the coder is five, which is an odd number. Having an odd number of XOR operation with "1" logic values at the input always results in coded "1". This can be seen in (12)-(15), using the same variable notation that was used in (8)-(11).

$$s[n] = \{1, 1, 1, 1, 1, 1\} \qquad\qquad (12)$$

$$x = 0 \qquad\qquad (13)$$

$$y_a = x \oplus s[2] \oplus s[3] \oplus s[5] \oplus s[6] = 1 \oplus 1 \oplus 1 \oplus 1 \oplus 1$$
$$= \left(\left(\left((1 \oplus 1) \oplus 1\right) \oplus 1\right) \oplus 1\right) = \left(\left((0 \oplus 1) \oplus 1\right) \oplus 1\right) \qquad (14)$$
$$= ((1 \oplus 1) \oplus 1) = (0 \oplus 1) = 1$$

$$y_b = x \oplus s[1] \oplus s[2] \oplus s[3] \oplus s[6] = 1 \oplus 1 \oplus 1 \oplus 1 \oplus 1 \qquad (15)$$

In conclusion, two uniform binary sequences can cross the coder unmodified, i.e. all "1" and all "0" sequences.

D. ADDRESSING THE EFFECT OF THE INTERLEAVER BLOCK

The purpose of the Interleaver is to distribute bit errors uniformly, in order to maximize FEC coding effectiveness. First of all, it separates the incoming bitstream on blocks of an integer number of bits, which will be jointly encoded in the same OFDM symbol on later stages. The number of bits per block depends on the modulation used on the Symbol Mapping block. Then, the Interleaver operates in the generated bit blocks with two steps. The first step distributes the adjacent bits within the block so that they will be encoded into nonadjacent subcarriers. This step protects the bit block against error bursts caused by narrow-band fading. The second step is only applied when high data rates are employed, which use QAM modulations. On those situations, the bits assigned to each subcarrier are distributed among the less and more significant bits of the QAM constellation symbol. This mechanism compensates for the greater systematic error rate that the least significant bits of QAM symbols suffer.

The effect of the Interleaver block can be avoided by pre-interleaving the sequence at the data input, so that bits will fall in their intended positions after the interleaving process. However, this complicates further the task of finding the correct input to generate an arbitrary bit sequence, as the pre-interleaved one needs to be a code word of the convolutional code. To avoid this pitfall, the two uniform "0" and "1" sequences can also be used. As they are uniform sequences, they cannot be modified by interleaving. Changing the positions of the elements of a uniform sequence does not change the resulting sequences.

E. POSSIBLE SYMBOLS FOUND ON THE SYMBOL MAPPING

After the previous blocks, which operate with binary values, the Symbol Mapping block is found. Symbol Mapping, in the IEEE 802.11g specification, converts the bit blocks at the output of the Interleaver into symbol blocks each one containing 48 complex symbol values. The conversion from bits into symbols is performed with one of the four available constellations in IEEE 802.11 OFDM PHY: BPSK, QPSK, 16-QAM, and 64-QAM. These symbols are also referred to as subcarriers or tones.

Using the results from previous subsections, two interesting binary sequences have been found, that, at the output of the Interleaver, form uniform bit blocks. These bit blocks, when coded by the Symbol Mapper, are able to generate uniform symbol blocks. As proven before, coding a uniform symbol block into an OFDM symbol generates the Peak Symbol waveform. However, not all symbols supported by the IEEE 802.11g constellations can be generated from these inputs. Due to the uniformity of the bit blocks used, only symbols that encode a series of "0" or "1" bits can be generated. The remaining available symbol values that can be used to build uniform symbol blocks are found on Table 2.

Table 2. PAPR obtained for each symbol and pilot tone phase combination

| Modulation | Symbol value | Coded Bits |
|---|---|---|
| BPSK | -1 | "0" |
| BPSK | +1 | "1" |
| QPSK | +1 + 1$j$ | "11" |
| QPSK | -1 - 1$j$ | "00" |
| 16-QAM | 1 + 1$j$ | "1111" |
| 16-QAM | -3 - 3$j$ | "0000" |
| 64-QAM | 3 + 3$j$ | "111111" |
| 64-QAM | -7 - 7$j$ | "000000" |

F. CHOOSING A SYMBOL TO MITIGATE THE EFFECT OF THE ADDITION OF PILOT TONES

After symbol mapping, pilot tone addition follows. Pilot tones are inserted at the Tone Mapping and Pilot Tone Insertion block, which adds 4 pilot symbols to the existing symbol block, increasing its length from 48 to 52. Pilot tones act as reference values for the receiver. The pilot tones are added on the following subcarrier indexes: 7, 21, -7, and -21. The amplitude of pilot tones is fixed at 1. Three of the tones share the same phase, and only one, with the index 21, shows an opposite phase. The pilot tone contribution to the symbol block is shown on sequence $P_{-26;26}$ from (16).

$$P_{-26,26} = \{0, 0, 0, 0, 0, 0, 1, 0, 0, 0, 0, 0, 0, 0, 0, 0, 0,$$
$$0, 0, 0, 1, 0, 0, 0, 0, 0, 0, 0, 0, 0, 0, 0, 0, 0, 1 \qquad (16)$$
$$0, 0, 0, 0, 0, 0, 0, 0, 0, 0, 0, 0, 0, -1, 0, 0, 0, 0, 0\}$$

The phase of the pilot tones is changed after each OFDM symbol. The values of the pilot tones are multiplied by -1 or +1 following a pseudo-random sequence. This sequence is the one generated by the Scrambler but, substituting "0" by "-1" and "1" by "+1". Due to this dynamic phase component, there are two pilot tone combinations that alternate: the first, with mostly positive phase, formed by three "+1" and one "-1"; and the second, with mostly negative phase, formed by three "-1" and one "+1".

The presence of these pilot tones changes the content of the symbol block, breaking its uniformity and altering the resulting OFDM symbol. In this way, the obtained PAPR of the Peak Symbol is degraded after pilot tone addition. The magnitude of this effect on the PAPR depends on the value of the subcarriers conforming the symbol block. i.e., if the value of the majority of the pilot tones is "-1", the PAPR of the resulting Peak Symbol will be higher if the rest of its subcarriers are also "-1", and lower if they are "+1". The simulator previously described was used to generate Peak Symbols with all the remaining subcarrier values and pilot tone combinations. The result of this study can be found in Table 3.

Table 3. PAPR obtained for each symbol and pilot tone phase combination

| Modulation | Symbol value | PAPR(dB) with majority negative pilot tones | PAPR(dB) with majority positive pilot tones |
|---|---|---|---|
| BPSK | -1 | 17.39 | 16.59 |
| BPSK | +1 | 16.59 | 17.39 |
| QPSK | 1 + 1$j$ | 16.76 | 17.24 |

(continued)

| Modulation | Symbol value | PAPR(dB) with majority negative pilot tones | PAPR(dB) with majority positive pilot tones |
|---|---|---|---|
| QPSK | -1 - 1$j$ | 17.24 | 16.76 |
| 16-QAM | 1 + 1$j$ | 15.11 | 16.27 |
| 16-QAM | -3 - 3$j$ | 17.35 | 16.99 |
| 64-QAM | 3 + 3$j$ | 16.16 | 16.90 |
| 64-QAM | -7 - 7$j$ | 17.38 | 17.05 |

The optimal Peak Symbol should present the highest average PAPR. In this way, a higher PAPR indicates greater similarity to the ideal peak waveform. The average PAPR is derived by averaging the PAPR of the two Peak Symbols generated by a given subcarrier value, one with each pilot tone combination (in phase and on opposite phase). Accordingly, the best subcarrier value, with an average PAPR of 17.22 dB, is 64-QAM "-7 -7j", which encodes 6 "0" bits. The BPSK "-1" and "+1" values, representing "0" and "1" logic values, are also interesting. They present best PAPR results when the pilot tones are in phase, with a PAPR of 17.39 dB. In contrast, Peak Symbols built using BPSK subcarrier values do not perform as well when the pilot tones are on opposite phase. The average PAPR for both BPSK "+1" and "-1" is 16.99, approximately 0,2 dB lower than the result obtained by 64-QAM "-7 -7j".

G. BIT SEQUENCES USED TO GENERATE THE PEAK SYMBOL

Previous sections (see Sections B, C, D and E) propose several bit sequences that can go through the blocks of the IEEE 802.11g OFDM PHY data path and produce uniform symbol blocks. These blocks are capable of generating Peak Symbols (see Section A) at the output of the IEEE 802.11 transmitter. Using these results, the conditions that a bit sequence capable of generating a Peak Symbol must fulfill can be obtained. These are summarized in the following statements:

1) The input bit sequence must be pre-scrambled in order to avoid the randomization introduced by the scrambler block.
2) The bit sequence at the output of the scrambler must be uniform, i.e., either all "0" or all "1 ". This way, modifications introduced by coding and interleaving are avoided.
3) The length of the sequence must be equal to the OFDM symbol payload length so that the sequence is long enough to modulate all the subcarriers with the same symbol value.
4) The sequence must be aligned with OFDM symbol boundaries. The entire bit sequence must be encoded jointly in the same OFDM symbol. If the sequence is divided into two OFDM symbols, uniformity is lost.

The generation of Peak Symbols based on BPSK "-1" and 64-QAM "-7 -7j" is explained in the following. Nonetheless, the Peak Symbols featuring other symbol values can be generated using the same principles. The coding rates chosen are selected so that the example sequences can be realized on actual data rates used by IEEE 802.11g.

- For BPSK "-1" with a coding rate of 1/2:
  This configuration corresponds to the 6 Mbps data rate used by IEEE 802.11g/a. To generate the Peak Symbol, a uniform sequence of 24 "0" bits is used. The input sequence must be pre-scrambled before being sent to the IEEE 802.11 OFDM PHY data path. This sequence generates a uniform symbol block with all subcarriers modulated to "-1". The OFDM symbol generated by this symbol block presents the waveform shown in Fig. 7A.
- For 64-QAM "-7 -7j" with a coding rate of 3/4:
  This configuration corresponds to the 54 Mbps data rate used by IEEE 802.11g/a. To generate the Peak Symbol, a uniform sequence of 216 "0" bits is used. The sequence must be pre-scrambled before being sent to the IEEE 802.11 OFDM PHY data path. This sequence generates a uniform symbol block with all subcarriers modulated to "-7 -7j". The OFDM symbol generated by this symbol block presents the waveform shown in Fig. 7B.

GENERATION OF THE FLAT SYMBOL

To complement the Peak Symbol, a Flat Symbol, with the minimum possible PAPR, has to be designed.

A. PROCEDURE TO OBTAIN THE FLAT SYMBOL

The Flat Symbol is the OFDM symbol that presents the minimum PAPR for a given modulation and coding rate combination. Therefore, the Flat Symbol must be constructed using the same modulation and coding scheme as its complimentary to the Peak Symbol. The reason for this requirement is that IEEE 802.11 OFDM PHY frames combining two different modulation schemes after the SIGNAL field are not supported. Consequently, there is a Flat Symbol for each of the Peak Symbols. Similar to the Peak Symbol, the Flat Symbol is built using the input bitstream to the IEEE 802.11 OFDM PHY. Then, in order to generate the Flat Symbol, the bit sequence constructing the OFDM symbol with minimum PAPR must be found. Nevertheless, the bit sequence that produces the Flat Symbol has to fulfill one condition: it cannot introduce any intersymbol interference. Such interference is produced by the six-sample memory of the convolutional coder. Depending on its contents, the coder could modify the first six values at the start of the following bit block, thus introducing unintended values into the bit block and altering its resulting OFDM symbol. In order to avoid interference, the state of the convolutional coder has to be reset at the end of each bit block. For this purpose, the last 6 bits of the bit sequence have to be either "0" or "1". The value of these last bits needs to be equal to the value used to generate the corresponding Peak Symbol, e.g., if the corresponding Peak Symbol is generated by a block of "0" bits, then, the last six bits of its matching Flat Symbol must be "0" as well. In this way, the search space for the optimal Flat Symbol encompasses bit sequences that end with either six "1" or six "0".

B. EXAMPLE OF FLAT SYMBOL GENERATION

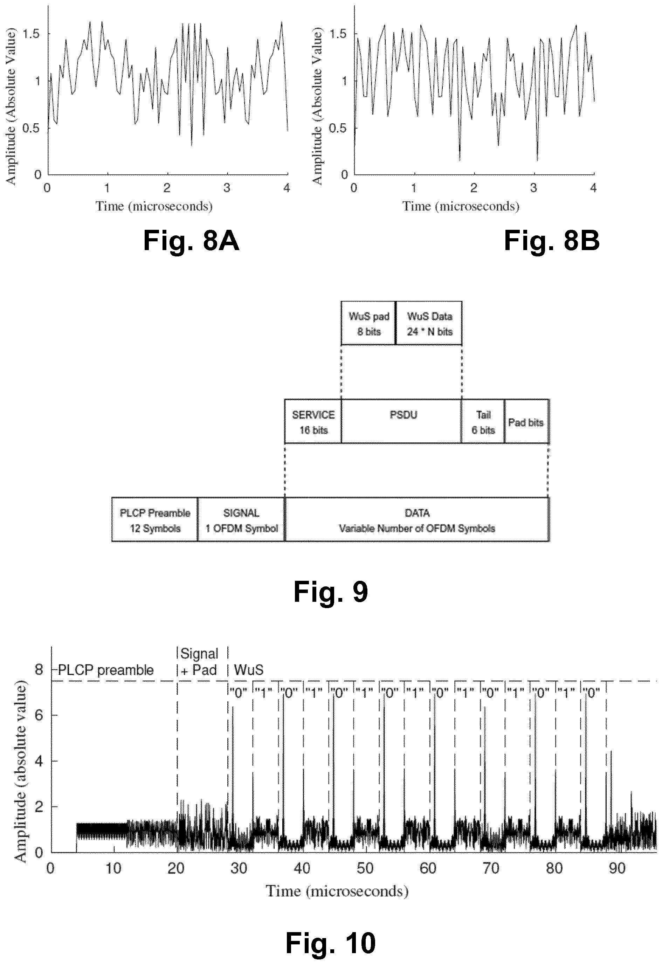

With this criterion, the proposed method in an embodiment proposes finding the bit sequence that generates the Flat Symbol for BPSK "-1" with 1/2 coding rate. The bit block length for this modulation and coding rate is of 24 bits. Consequently, the search space for the optimization problem becomes all sequences of 24 bits that end with 6 consecutive "0" bits, with a total of 218 possible sequences. This is still a tractable number of sequences to be studied. In this way, the PAPR of the OFDM symbols generated by every possible bit sequence is calculated. The resulting Flat Symbol for "BPSK" "-1" with coding rate 1/2, generated by the bit sequence $s[n]$ from (17), presents an average PAPR of 3.09 dB. The resulting Peak Symbol waveform is shown in Fig. 8.

$$s[n] = \{1, 1, 0, 0, 1, 1, 1, 0, 1, 0, 1, 1, 0, 1, 0, 1, 0, 0, 0, 0, 0, 0, 0, 0\} \quad (17)$$

SIMULATION

Once the bit sequences that generate both the Peak and Flat Symbols for a given modulation were found, a Proof of Concept (PoC) of the proposed device was created. In a preferred embodiment, the proposed device, for example a Wake-up Transmitter, is based on IEEE 802.11g and is implemented using the MATLAB WLAN Toolbox simulation tool. The MATLAB WLAN toolbox implementation allows setting the initial state of the scrambler. The PoC is particularized for the following parameters: the modulation used is BPSK, the symbol value used on Peak Symbols is "-1", and the coding rate used is ½. On this PoC, the Peak Symbol is used to encode the "0" logic value and the Flat Symbol is used to encode the "1" logic value. This would be the most advisable codification if the used receiver was based on OOK detection. For such a receiver, the Peak Symbols produce a low level at sampling time, while the Flat Symbols produce a high level. On this PoC of the proposed device, the bitstream that generates the wireless signal is injected at PSDU level following the legacy non-HT IEEE 802.11 frame structure, [12] represented in Fig. 9. Only the PSDU field of the IEEE 802.11 frame is modified by the generated wireless signal (e.g. a Wake-up Signal), being the remaining fields of an IEEE 802.11 standard frame not altered by this implementation.

The following steps describe an embodiment of a method for generating the wireless signal, in this particular case, a Wake-up Signal, using the peak-flat modulation with the proposed device, wherein the Peak Symbol is based on the BPSK "-1" option (cf. section G). This method is also compatible with any standard compliant IEEE 802.11g/a OFDM PHY transmitter, if the initial scrambler state is known.

1) Align the Wake-up Signal bits to OFDM symbol length with padding. The first 16 bits corresponding to the IEEE 802.11 non-HT PPDU are occupied by the Service field, which is not part of the PSDU. Padding is required to begin the Wake-up Signal at the OFDM symbol boundary. In this way, 8 bits of padding are appended at the start of the PSDU. The padding completes the first OFDM symbol and allows the Wake-up Signal to start on the second OFDM symbol of the PSDU. Alignment of OFDM symbols is required to generate the peak-flat modulation symbols. After this step, the proposed device is ready to encode the WuS.

2) Append the Wake-up Signal data. Add a bit block for each Wake-up Signal payload bit. If the Wake-up Signal bit value is "1", append the 24-bit Flat Symbol sequence. In the case of a "0" value, use the 24 bit "0" sequence for a Peak Symbol.

3) Pre-scramble the Wake-up Signal to ensure the proper output sequence after the scrambler. After 2), the real Scrambler would have already scrambled the 24 bits pertaining to the first OFDM symbol of the PSDU. Therefore, the predicted scrambler state has to be advanced 24 bits, in order to align it with the real scrambler state. Subsequently, for every PSDU bit generated in step 2), advance the predicted scrambler state one bit and XOR the predicted scrambler result to that bit.

4) Transmit the resulting binary sequence, composed by the PSDU. The final PSDU includes the padding bits required to skip the first OFDM symbol as well as the pre-scrambled Wake-up Signal bits, coded on one OFDM symbol each. The PSDU is now sent to the lower layers of the stack for transmission.

Consider the waveform generated by the proposed device and represented in Fig. 10. The Wake-up Signal displayed carries the Wake-up Signal payload "010101010101010". This sequence, which alternates peak and Flat Symbols, displays the differences between the two possible waveforms of the peak-flat modulation. Peak Symbols, labeled as "0" feature its characteristic peak and the low amplitude region that follows it. Flat Symbols, labeled as "1" have less extreme values and a more rectangular shape. As it can be observed, the Flat Symbols that follow a Peak Symbol display a secondary peak with roughly half of the amplitude of the peak featured in the Peak Symbol. This is caused by the MATLAB WLAN Toolbox implementation of windowing, occurring at the start of every OFDM symbol. The purpose of this mechanism, which by no means is fulfilled in this particular case, is to smooth OFDM symbol transitions.

Following, two receiver architectures for the chosen peak-flat signal modulation will be presented.

RECEIVER PROPOSALS

To evaluate the viability of the receivers, their BER vs. SNR is used as the figure of merit. The results will be based on simulations with ideal components using Simulink.

A. GENERAL ARCHITECTURE FOR THE RECEIVER

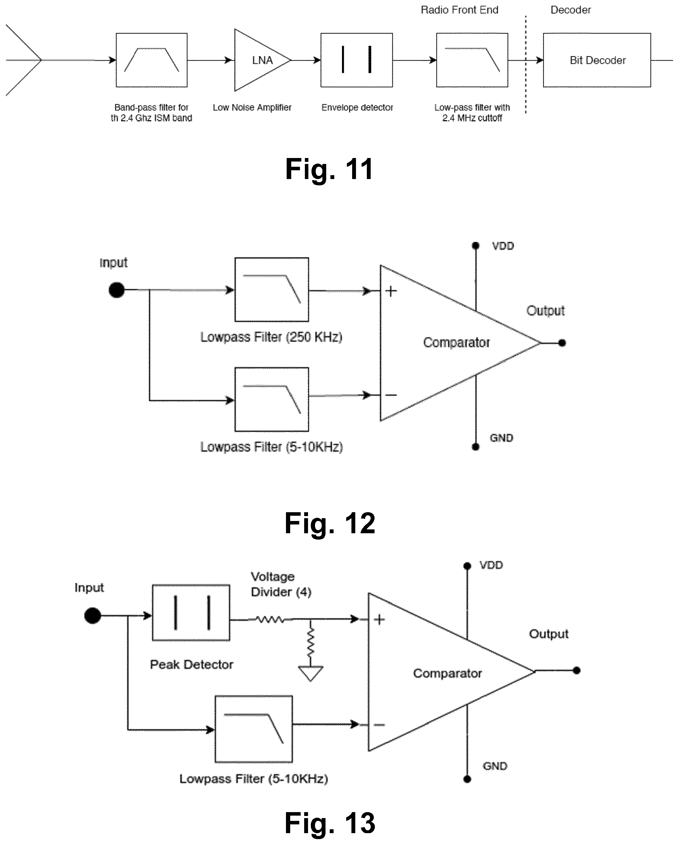

In an embodiment, the proposed receiver, shown in Fig. 11, is composed of a Radio Front End and a bit decoder, which is an element that decodes the incoming analog waveform into a binary stream. The component blocks of the proposed Radio Front End consist of the following elements: an antenna, a bandpass filter (tuned to the 2.4GHz ISM band for the preferred embodiment, IEEE 802.11g), a Low Noise Amplifier (LNA), an envelope detector and, finally, a low-pass filter, used to remove harmonics introduced by the nonlinear envelope detector. Two different implementations are proposed for the bit decoder, the first is targeted at OOK signal decoding and the second one is based on a peak detector.

B. BIT DECODING USING AN OOK DETECTOR

The first receiver bit decoder implementation follows the basic design for OOK signal detection. The working principle of this design, applied to the peak-flat modulation, is the following. The envelope for Flat Symbols is higher than the envelope for Peak Symbols, outside the peak region, as was previously shown and as can be observed in Fig. 10.

Therefore, the amplitudes created by peak and Flat Symbols are distinguishable. This receiver is additionally capable of decoding OOK-based modulations, as the one used in the current IEEE 802.11ba proposal. The proposed bit decoder follows a basic implementation, two filters, and a comparator. A block diagram of the proposed design is shown in Fig. 12. The first filter is tuned close to 250 KHz, matching it with the IEEE 802.11g OFDM symbol rate. The purpose of this filter is to smooth the envelope of the signal, in order to allow for reliable detection of the amplitude level. The filter cutoff frequency is sufficient to smooth the contents of the OFDM symbol while providing a response fast enough to separate consecutive OFDM symbols. The second filter is tuned to a frequency that allows it to obtain an almost constant envelope from a regular IEEE 802.11 frame, i.e. from 5kHz - 10kHz. This range of frequencies was obtained heuristically on the simulations. The output of the second filter is used as the reference value for detection. Finally, a comparator is used to compare the output of both filters. If the output of the first filter, which tracks signal envelope, is higher than the one from the second filter, which provides the reference value, the comparator output becomes high. On the contrary, if the output from the first filter is lower than the reference value, the comparator output becomes low.

This architecture has been implemented using a Simulink model for evaluation. Both filters are implemented with a first order RC filter, one at 250kHz, the other at 5 kHz..

On this receiver architecture, in addition to the peak-flat modulation proposed by present invention, two other state-of-the-art modulations were tested: the first is a 250 kBd OOK modulation with perfect extinction ratios, and the second, the current proposal for IEEE 802.11ba fast data rate. However, the receiver must be modified slightly in order to receive IEEE 802.11ba fast data rate, since IEEE 802.11ba operates using $2\mu$s OOK symbols, the bandwidth of the first low-pass filter, which tracks the signal envelope, must be increased to a value close to 500 kHz.

Following, the proposed architecture using a peak detector will be presented.

## C. BIT DECODING USING A PEAK DETECTOR

The second possible implementation for the receiver bit decoder is based on distinguishing between both symbols by the presence of a peak, which rises well above the average amplitude of the symbol. The working principle of this proposal is that, due to their own design, Peak Symbols have a greater PAPR rate than Flat Symbols and produce a detectable peak, well above from the maximum signal level produced by Flat Symbols. This peak can effectively be detected using a simple peak detector circuit.

The implementation of the bit decoder is composed of a peak detector circuit, a voltage divider, a low-pass filter and a comparator. A block diagram of the proposed design is shown in Fig. 13. The peak detector is implemented using a Schottky diode, followed by a parallel capacitor for charge storage. When the input signal is greater than the diode voltage threshold, the capacitor will charge faster than when it is under the threshold, generating an asymmetry. When a peak is received, the peak detector charges fast, and then, after the peak ends, it discharges at a slower speed. This effect increases the duration of the peak, which is originally 50ns, a single sample at 20 MHz. Increasing the duration of the peak allows for its detection using feature limited electronics. To reduce the probability of false peak detection, a voltage divider is connected at the output of the peak detector. Without this component, whenever the peak detector output rises above the average amplitude of the frame, a peak would be detected, making false peak detection more likely. The voltage divider allows the comparator to produce a high value only when the peak value is several times above the average envelope. The low-pass filter element has the same purpose as the second filter of the OOK detector architecture, i.e. to provide a reference value based on the frame envelope. The decoding decision is determined by the comparator output. The voltage divider output is connected to the comparator non-inverting input, while the low-pass filter output, which tracks the average envelope of the frame, is connected to its inverting input. Using this configuration, a peak only produces a high level at the comparator's output when its value is a multiple of the frame average envelope, provided by the low-pass filter. The value used for this detection threshold was determined experimentally, and it is four times above the frame average amplitude provided by the low-pass filter. Conversely to the OOK receiver, the peak detector generates a high logic value for Peak Symbols and a low one for Flat Symbols.

For the Simulink implementation of this receiver, the filter keeping the frame reference level is, as well as for the OOK implementation, a first-order RC filter tuned at 5 KHz. The value for the capacitance used for the peak detector is 1nF and was heuristically determined using a parametric sweep on the Simulink model. The peak detector, jointly with the resistances of the voltage divider, increments the duration of the peak to 1 $\mu$s. The voltage divider uses resistances of 3 k$\Omega$ and 8.6 k$\Omega$, which are standard component values. These values produce a divider with a rate close to 4, and provide a slow enough discharge speed for the capacitor. The only modulation tested in this device was the peak-flat modulation proposed by the present invention.

## D. DECODER EVALUATION

To evaluate the proposed modulation, BER vs. SNR is simulated for both receiver architectures and different modulations. Both Additive White Gaussian Noise (AWGN) channel and Channel B fading channel model are considered in this test.. The SNR was evaluated at 20 MHz bandwidth. The equivalent noise bandwidth that affects the receiver is inferior due to the 2.5 MHz low-pass filter used after envelope detection. However, using SNR referred at 20 MHz allows comparing the results of the receiver modulations with standard WLAN signals. Firstly, the peak-flat modulation proposed by present invention was tested using both detector designs. Then, to get a more comprehensive idea of the peak-flat modulation performance, other state-of-the-art modulations used in Wake-up Receiver systems are also examined. For these modulations, the OOK receiver defined before was used as reference receiver. The modulations tested were an OOK modulation at 250 kbps, and the IEEE 802.11ba fast data rate modulation. All of them were tested using ideal square pulses.

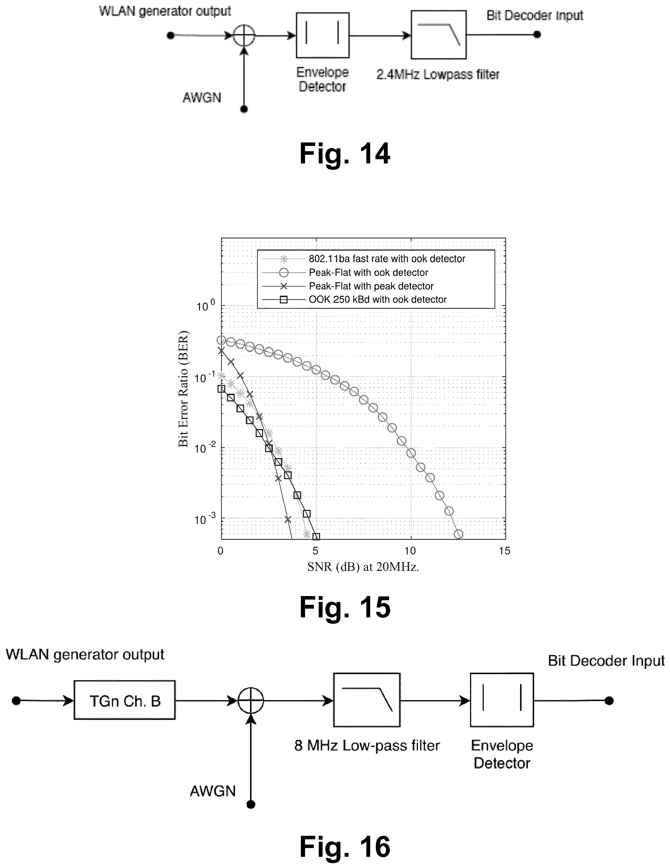

The signal processing chain used in the AWGN channel test is shown in Fig. 14. It is based on the receiver structure proposed in A and displayed in Fig. 11. The AWGN is added at the start of the simulation chain. Then, the received signal, plus the noise, are demodulated using an ideal envelope detector. The results are then filtered by a second degree Butterworth low-pass filter with 2.5 MHz cutoff frequency and, finally, introduced to the bit decoder. The results from the bit decoder are sampled and compared with the input bit stream for BER computation. The simulation is performed in steps of 0.5 dB of SNR. For each simulation step, 64000 bits are used to calculate the BER.

Simulation results for the AWGN channel are shown in Fig. 15, for BER values up to $5*10^{-4}$. Ideal OOK, IEEE 802.11ba fast data rate and peak-flat modulation, the latter evaluated also with the peak detector approach, exhibit similar performance. Peak-flat modulation with the peak detector achieves a $10^{-3}$ BER at roughly 3.5 dB of SNR, while IEEE 802.11ba needs 4.5 dB SNR to achieve the same result, and OOK falls behind at roughly 5.5 dB SNR for a sensitivity of $10^{-3}$. Finally, peak-flat modulation, decoded with OOK detector, falls well behind the other options. Thus, the peak-flat modulation performance appears to be similar or better than the current state of the art of solutions, while using legacy IEEE 802.11 radios.

The TGn Ch.B simulation signal processing chain used to simulate PER results in fading channels is shown in Fig. 16. In contrast to the prior AWGN simulation, now the incoming WLAN signal is distorted by a fading channel based in TGn Channel B model. This simulation is executed in steps of 0.5 dB, with 5000 frames of 128 bits simulated per step

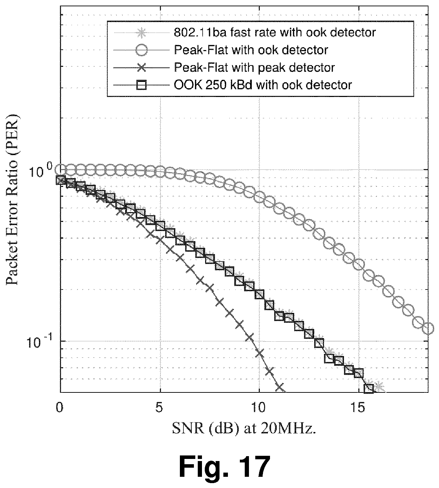

Simulation results for the TGn CH.B fading channel model are shown in Fig. 17, for PER values up to $5*10^{-2}$. Ideal OOK, IEEE 802.11ba fast data rate, exhibit similar performance, both achieving a PER of $10^{-1}$ at 13 dB SNR. Peak-flat modulation with the peak detector achieves a $10^{-1}$ PER at roughly 10 dB of SNR, while IEEE 802.11ba needs 19 dB SNR to achieve the same.

Thus, the peak-flat modulation performance appears to be similar or better than the current state of the art of solutions, while using legacy IEEE 802.11 radios.

The methods and device discussed above are examples. Various configurations may omit, substitute, or add various method steps or procedures, or system components as appropriate. For instance, in alternative configurations, the methods may be performed in an order different from that described, and/or various stages or steps or modules may be added, omitted, and/or combined. In addition, features described with respect to certain configurations may be combined in various other configurations. Different aspects and elements of the configurations may be combined in a similar manner. Moreover, technology evolves and, thus, many of the elements are examples and do not limit the scope of the disclosure or claims.

Specific details are given in the description to provide a thorough understanding of example configurations (including implementations). However, configurations may be practiced without these specific details. This description provides example configurations only, and does not limit the scope, applicability, or configurations of the claims. Rather, the preceding description of the configurations will provide those of skill with an enabling description for implementing described techniques.

Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

The scope of the present invention is defined in the following set of claims.

### Claims

1. A method to generate an amplitude-based modulated wireless signal based on orthogonal frequency-division multiplexing, OFDM, to be received by at least one low-power non-coherent receiver, the method comprising:
   generating, by a transmitter, the amplitude-based modulated wireless signal having Peak and Flat OFDM Symbols to be transmitted to the at least one low-power non-coherent receiver through a radio interface by coding binary data generating a given bit sequence using an OFDM block structure compliant with a given communication standard, **characterized in that**:

   the given bit sequence is uniform and is pre-scrambled before being introduced to the OFDM block structure using the same bit sequence that a Scrambler of the OFDM block structure will generate, has a length equal to the length of a payload OFDM symbol according to the given communication standard, and is aligned with OFDM symbol boundaries of the communication standard, so that the entire bit sequence is encoded jointly in the same OFDM symbol, and
   the amplitude-based modulated wireless signal having Peak and Flat OFDM Symbols is generated using a Peak to Average Power Ratio, PAPR, of the OFDM symbols to encode information, the Peak Symbols presenting a higher PAPR than the Flat Symbols.

2. The method of claim 1, wherein the OFDM block structure being compliant with a standard defined by the Institute of Electrical and Electronics Engineers, IEEE, 802.11 Working Group.

**3.** The method of claim 2, wherein the OFDM block structure comprises:

    i) adding a pseudo-random sequence, known by the transmitter and the receiver, to the binary data, providing a pseudo-random sequence binary data;
    ii) encoding the pseudo-random sequence binary data using a given coding rate;
    iii) separating the encoded pseudo-random sequence binary data into different blocks of bits and interleaving its content;
    iv) transforming each block of bits into an OFDM symbol by:

        converting binary values from the bit block into complex symbols using a given constellation, forming a symbol block;
        adding four maximum amplitude symbols;
        padding with "0" symbols the symbol block, increasing the size thereof;
        applying an Inverse Fast Fourier Transform to the symbol block; and
        prepending a cyclic prefix to a time domain symbol; and

    v) transforming the OFDM symbols into an analog domain.

**4.** The method of claim 3, wherein said constellation comprises BPSK, QPSK, 16-QAM, 64-QAM, 256-QAM or 1024-QAM.

**5.** The method of claim 3, wherein the constellation comprises BPSK, the method further comprising for a BPSK having a symbol value "-1" with a coding rate of 1/2 using as the given bit sequence a uniform sequence of 24 "0" bits to generate the Peak Symbol, wherein the given bit sequence is pre-scrambled before being introduced to the block structure, generating a uniform symbol block with all subcarriers modulated to "-1".

**6.** The method of claim 3, wherein the constellation comprises 64-QAM, the method further comprising for a 64-QAM having a symbol value "-7 -7j" with a coding rate of 3/4 using as the given bit sequence a uniform sequence of 216 "0" bits to generate the Peak Symbol, wherein the given bit sequence is pre-scrambled before being introduced to the block structure, generating a uniform symbol block with all subcarriers modulated to "-7 -7j".

**7.** The method of claim 1, wherein the transmitter comprises a Wake-up Transmitter and the generated amplitude-based modulated wireless signal comprises a Wake-up Signal.

**8.** A device, comprising a transmitter to generate an amplitude-based modulated wireless signal based on orthogonal frequency-division multiplexing, OFDM, to be received by at least one low-power non-coherent receiver, the transmitter comprising:

    means configured to generate the amplitude-based modulated wireless signal having Peak and Flat OFDM symbols by coding binary data generating a given bit sequence using an OFDM block structure compliant with a given communication standard; and
    means configured to transmit the generated amplitude-based modulated wireless signal to the at least one low-power non-coherent receiver,

**characterized in that**:

    the given bit sequence is uniform and is pre-scrambled before being introduced to the OFDM block structure using the same bit sequence that a Scrambler of the OFDM block structure will generate, has a length equal to the length of a payload OFDM symbol according to the given communication standard, and is aligned with OFDM symbol boundaries of the communication standard, so that the entire bit sequence is encoded jointly in the same OFDM symbol, and
    the amplitude-based modulated wireless signal having Peak and Flat OFDM Symbols is generated using a Peak to Average Power Ratio, PAPR, of the OFDM symbols to encode information, the Peak Symbols presenting a higher PAPR than the Flat Symbols.

**9.** The device of claim 8, wherein the transmitter comprises a Wake-up Transmitter and the generated amplitude-based modulated wireless signal comprises a Wake-up Signal.

**Patentansprüche**

1.  Verfahren zur Erzeugung eines amplitudenbasierten drahtlosen Modulationssignals basierend auf orthogonalem Frequenzteilungsmultiplex, OFDM, zur Rezeption bei mindestens einem nicht kohärenten Empfänger mit niedriger Leistung, wobei das Verfahren Folgendes umfasst:

    das Erzeugen, mittels eines Senders, des amplitudenbasierten drahtlosen Modulationssignals aufweisend Spitzen- und Flach-OFDM-Symbole, welches auf den mindestens einen nicht kohärenten Empfänger mit niedriger Leistung über eine Funkschnittstelle mittels Kodierens von Binärdaten übertragen werden soll, unter Erzeugung einer gegebenen Bitfolge unter Verwendung einer OFDM-Blockstruktur konform mit einem gegebenen Kommunikationsstandard,
    **dadurch gekennzeichnet, dass**:

    die gegebene Bitfolge einheitlich ist und vorgescrambelt wird, bevor sie in die OFDM-Blockstruktur eingeführt wird, unter Verwendung der gleichen Bitfolge, welche ein Scrambler der OFDM-Blockstruktur erzeugen wird, eine Länge aufweist, welche der Länge eines Nutzlast-OFDM-Symbols gemäß dem gegebenen Kommunikationsstandard gleich ist, und mit OFDM-Symbolgrenzen des Kommunikationsstandards ausgerichtet ist, sodass die gesamte Bitfolge zusammen im gleichen OFDM-Symbol kodiert wird, und
    das amplitudenbasierte drahtlose Modulationssignal aufweisend Spitzen- und Flach-OFDM-Symbols unter Verwendung eines Verhältnisses von Spitzenleistung zu Durchschnittsleistung, PAPR, der OFDM-Symbole, um Information zu kodieren, erzeugt wird, wobei die Spitzensymbole ein höheres PAPR als die Flachsymbole aufweisen.

2.  Verfahren nach Anspruch 1, wobei die OFDM-Blockstruktur konform mit einem Standard ist, welcher von der Arbeitsgruppe des Institutes of Electrical und Electronics Engineers, IEEE, 802.11 definiert wird.

3.  Verfahren nach Anspruch 2, wobei die OFDM-Blockstruktur Folgendes umfasst:

    i) das Hinzufügen einer Pseudozufallsfolge, welche für den Sender und den Empfänger bekannt ist, zu den Binärdaten, unter Bereitstellung einer Pseudozufallsfolge von Binärdaten;
    ii) das Kodieren der Pseudozufallsfolge von Binärdaten unter Verwendung einer gegebenen Kodierrate;
    iii) das Trennen der kodierten Pseudozufallsfolge von Binärdaten in unterschiedliche Blöcke von Bits und das Verschachteln deren Inhalts;
    iv) das Verwandeln jedes Blocks von Bits in ein OFDM-Symbol mittels:

    des Umwandelns von binären Werten aus dem Block von Bits in komplexe Symbole unter Verwendung einer gegebenen Konstellation, unter Bildung eines Symbolblocks;
    des Hinzufügens von vier maximalen Amplitudensymbolen;
    des Auffüllens mit"0"-Symbolen des Symbolblock, sodass die Größe desselben erhöht wird;
    des Anwendens einer inversen schnellen Fourier-Transformation auf das Symbolblock; und
    des Voranstellens eines zyklischen Vorzeichens an einem Zeitdomänensymbol; und

    v) das Verwandeln der OFDM-Symbole in eine analoge Domäne.

4.  Verfahren nach Anspruch 3, wobei die genannte Konstellation BPSK, QPSK, 16-QAM, 64-QAM, 256-QAM oder 1024-QAM umfasst.

5.  Verfahren nach Anspruch 3, wobei die Konstellation BPSK umfasst, wobei das Verfahren zusätzlich eine BPSK aufweisend einen Symbolwert "-1" mit einer Kodierrate von 1/2 unter Verwendung als gegebene Bitfolge einer einheitlichen Folge von 24 "0"-Bits zur Erzeugung des Spitzensymbols umfasst, wobei die gegebene Bitfolge vorgescrambelt wird, bevor sie in die Blockstruktur eingeführt wird, unter Erzeugung eines einheitlichen Symbolblocks mit allen Zwischenträgern auf "-1" moduliert.

6.  Verfahren nach Anspruch 3, wobei die Konstellation 64-QAM umfasst, wobei das Verfahren zusätzlich eine 64-QAM aufweisend einen Symbolwert "-7 -7j" mit einer Kodierrate von 3/4 unter Verwendung als gegebene Bitfolge einer einheitlichen Folge von 216 "0"-Bits zur Erzeugung des Spitzensymbols umfasst, wobei die gegebene Bitfolge vorgescrambelt wird, bevor sie in die Blockstruktur eingeführt wird, unter Erzeugung eines einheitlichen Symbolblocks mit allen Zwischenträgern auf "-7 -7j" moduliert.

**7.** Verfahren nach Anspruch 1, wobei der Sender einen Wecksender umfasst und das erzeugte amplitudenbasierte drahtlose Modulationssignal ein Wecksignal umfasst.

**8.** Vorrichtung, umfassend einen Sender zur Erzeugung eines amplitudenbasierten drahtlosen Modulationssignal basierend auf orthogonal Frequenzteilungsmultiplex, OFDM, zur Rezeption bei mindestens einem nicht kohärenten Empfänger mit niedriger Leistung, wobei der Sender Folgendes umfasst:

Mittel, welche dazu ausgebildet sind, das amplitudenbasierte drahtlose Modulationssignal aufweisend Spitzen- und Flach-OFDM-Symbole zu erzeugen, indem Binärdaten kodiert werden, unter Erzeugung einer gegebenen Bitfolge unter Verwendung einer OFDM-Blockstruktur konform mit einem gegebenen Kommunikationsstandard; und

Mittel, welche dazu ausgebildet sind, das erzeugte amplitudenbasierte drahtlose Modulationssignal auf den mindestens einen nicht kohärenten Empfänger mit niedriger Leistung zu übertragen, **dadurch gekennzeichnet, dass**:

die gegebene Bitfolge einheitlich ist und vorgescrambelt wird, bevor sie in die OFDM-Blockstruktur eingeführt wird, unter Verwendung der gleichen Bitfolge, welche ein Scrambler der OFDM-Blockstruktur erzeugen wird, eine Länge aufweist, welche der Länge eines Nutzlast-OFDM-Symbols gemäß dem gegebenen Kommunikationsstandard gleich ist, und mit OFDM-Symbolgrenzen des Kommunikationsstandards ausgerichtet ist, sodass die gesamte Bitfolge zusammen im gleichen OFDM-Symbol kodiert wird, und das amplitudenbasierte drahtlose Modulationssignal aufweisend Spitzen- und Flach-OFDM-Symbole unter Verwendung eines Verhältnisses von Spitzenleistung zu Durchschnittsleistung, PAPR, der OFDM-Symbole erzeugt wird, um Information zu kodieren, wobei die Spitzensymbole ein höheres PAPR als die Flachsymbole aufweist.

**9.** Vorrichtung nach Anspruch 8, wobei der Sender einen Wecksender umfasst und das erzeugte amplitudenbasierte drahtlose Modulationssignal ein Wecksignal umfasst.

**Revendications**

**1.** Une méthode pour générer un signal sans fil modulé basé sur l'amplitude, basée sur le multiplexage orthogonal de division de fréquence, OFDM, à être reçu par au moins un récepteur non cohérent à basse puissance, la méthode comportant :
générer, au moyen d'un transmetteur, le signal sans fil modulé basé sur l'amplitude ayant des Symboles OFDM Crête et Plat à transmettre à au moins un récepteur non cohérent à basse puissance à travers une interface radio par codage de données binaires générant une certaine séquence de bits en utilisant une structure de blocs OFDM conforme à un certain niveau de communication,
**caractérisé en ce que** :

la certaine séquence de bits est uniforme et est pré-brouillée avant d'être introduite dans la structure de blocs OFDM en utilisant la même séquence de bits qu'un brouilleur de la structure de blocs OFDM générera, elle possède une longueur égale à la longueur d'un symbole OFDM de charge utile conformément à un certain niveau de communication et elle est alignée aux limites de symbole OFDM du niveau de communication, de sorte que toute la séquence de bits est codée ensemble dans le même symbole OFDM et
le signal sans fil modulé basé sur l'amplitude ayant des Symboles OFDM Crête et Plat est généré en utilisant un Ratio de Puissance de Crête à Moyenne, PAPR, des symboles OFDM pour coder des informations, les Symboles Crête présentant un PAPR plus élevé que les Symboles Plat.

**2.** La méthode de la revendication 1, dans laquelle la structure de blocs OFDM conforme à un niveau défini par le Groupe de Travail de l'Institut d'Ingénieurs Électriques et Électroniques, IEEE, 802.11.

**3.** La méthode de la revendication 2, dans laquelle la structure de blocs OFDM comporte :

i) ajouter une séquence pseudo aléatoire, connue par le transmetteur et le récepteur, aux données binaires, offrant une séquence pseudo aléatoire de données binaires ;
ii) coder les données binaires de séquence pseudo aléatoire en utilisant un certain taux de codage ;
iii) séparer les données binaires de séquence pseudo aléatoire codées en différents blocs de bits et en entrelaçant leur contenu ;

iv) transformer chaque bloc de bits en un symbole OFDM par :

conversion de valeurs binaires du bloc de bits en des symboles complexes en utilisant une certaine constellation, en formant un bloc de symboles ;

ajout de quatre symboles d'amplitude maximum ;

remplissage avec des symboles « 0 » le bloc de symboles, en accroissant sa taille ;

application d'une transformation de Fourier rapide inverse au bloc de symboles ; et

préfixation d'un préfixe cyclique à un symbole de domaine temporel ; et

v) transformation des symboles OFDM en un domaine analogique.

4. La méthode de la revendication 3, dans laquelle cette constellation comporte BPSK, QPSK, 16-QAM, 64-QAM, 256-QAM ou 1024-QAM.

5. La méthode de la revendication 3, dans laquelle la constellation comporte BPSK la méthode en outre comportant un BPSK ayant une valeur de symbole « -1 » avec un taux de code de 1/2 en utilisant comme la certaine séquence de bits une séquence uniforme de 24 bits « 0 » pour générer le Symbole de Crête, dans laquelle la certaine séquence de bit est pré-brouillée avant d'être introduite dans la structure de blocs, en générant un bloc de symboles uniforme ayant toutes les sous-porteuses modulées à « -1 ».

6. La méthode de la revendication 3, dans laquelle la constellation comporte 64-QAM, la méthode comportant en outre pour un 64-QAM ayant une valeur de symbole « -7 -7j » ayant un taux de code 3/4 en utilisant comme certaine séquence de bits une séquence uniforme de 216 « 0 » bits pour générer le Symbole de Crête, dans laquelle la certaine séquence de bits est pré-brouillée avant d'être introduite dans la structure de blocs, en générant un bloc de symboles uniforme ayant toutes les sous-porteuses modulées à « -7 -7j ».

7. La méthode de la revendication 1, dans laquelle le transmetteur comporte un Transmetteur de Réveil et le signal sans fil modulé basé sur l'amplitude générée comporte un Signal de Réveil.

8. Un dispositif comportant un transmetteur pour générer un signal sans fil modulé basé sur l'amplitude basée sur le multiplexage orthogonal de division de fréquence, OFDM, à être reçu par au moins un récepteur non cohérent à basse puissance, le transmetteur comportant :

des moyens configurés pour générer le signal sans fil modulé basé sur l'amplitude ayant des symboles Crête et Plat OFDM par codage de données binaires générant une certaine séquence de bits en utilisant une structure de blocs OFDM conformément à un certain niveau de communication ; et

des moyens configurés pour transmettre le signal sans fil modulé basé sur l'amplitude à au moins un récepteur non cohérent de basse puissance,

**caractérisé en ce que** :

la certaine séquence de bits est uniforme et est pré-brouillée avant d'être introduite dans la structure de blocs OFDM en utilisant la même séquence de bits qu'un brouilleur de la structure de blocs OFDM générera, elle possède une longueur égale à la longueur d'un symbole OFDM à charge utile conformément à un certain niveau de communication , et elle est alignée aux limites de symbole OFDM du niveau de communication de sorte que toute la séquence complète de bits est codée ensemble dans le même symbole OFDM, et

le signal sans fil modulé basé sur l'amplitude ayant des Symboles OFDM Crête et Plat est généré en utilisant un Ratio de Puissance Crête à Moyenne , PAPR, des symboles OFDM pour coder les informations, les Symboles Crête présentant un PARP plus élevé que les symboles plats.

9. Le dispositif de la revendication 8, dans lequel le transmetteur comporte un transmetteur de réveil et le signal sans fil modulé basé sur l'amplitude généré comporte un signal de réveil.

# Fig. 1

# Fig. 2

## Fig. 3

(a) Before Guard Interval insertion, 64 samples.

(b) Amplitude of the OFDM symbol after Guard Interval insertion, 80 samples.

## Fig. 4

Fig. 5

Fig. 6

Fig. 7A

Fig. 7B

Fig. 8A

Fig. 8B

Fig. 9

Fig. 10

## Fig. 11

## Fig. 12

## Fig. 13

WLAN generator output

Bit Decoder Input

AWGN

Envelope
Detector

2.4MHz Lowpass filter

# Fig. 14

- · * · 802.11ba fast rate with ook detector
- ──○── Peak-Flat with ook detector
- ──✕── Peak-Flat with peak detector
- ──☐── OOK 250 kBd with ook detector

Bit Error Ratio (BER)

SNR (dB) at 20MHz.

# Fig. 15

WLAN generator output

Bit Decoder Input

TGn Ch. B

AWGN

8 MHz Low-pass filter

Envelope
Detector

# Fig. 16

Fig. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2018184379 A1
- US 2018184435 A1
- US 2018183905 A1
- US 2018184378 A1

### Non-patent literature cited in the description

- Wake-up radio as an energy-efficient alternative to conventional wireless sensor networks mac protocols. **J. OLLER ; I. DEMIRKOL ; J. CASADEMONT ; J. PARADELLS ; G. U. GAMM ; L. REINDL.** Proceedings of the 16th ACM International Conference on Modeling, Analysis & Simulation of Wireless and Mobile Systems. ACM, 2013, 173-180
- IEEE Draft Standard for Information Technology-Telecommunications and Information Exchange Between Systems Local and Metropolitan Area Networks-Specific Requirements Part 11: Wireless LAN Medium Access Control (MAC) and Physical Layer (PHY) Specifications Amendment: Wake-Up Radio Operation. *IEEE Standard P802.11ba/D3.0,* May 2019
- Power-efficient rendez-vous schemes for dense wireless sensor networks. **E.-Y. LIN ; J. M. RABAEY ; A. WOLISZ.** Communications, 2004 IEEE International Conference on. IEEE, 2004, vol. 7, 3769-3776
- **A. DUNKELS.** *The contikimac radio duty cycling protocol,* 2011
- **M. MAGNO ; V. JELICIC ; B. SRBINOVSKI ; V. BILAS ; E. POPOVICI ; L. BENINI.** Design, implementation, and performance evaluation of a flexible low latency nanowatt wake-up radio receiver. *IEEE Transactions on Industrial Informatics,* 2016, vol. 12 (2), 633-644
- Wake-up radio using IEEE 802.11 frame length modulation for radio-on demand wireless LAN. **Y. KONDO ; H. YOMO ; S. TANG ; M. IWAI ; T. TANAKA ; H. TSUTSUI ; S. OBANA.** Personal Indoor and Mobile Radio Communications (PtMRC), 2011 IEEE 22nd International Symposium on. IEEE, 2011, 869-873

- **J. OLLER ; E. GARCIA ; E. LOPEZ ; I. DEMIRKOL ; J. CASADEMONT ; J. PARADELLS ; U. GAMM ; L. REINDL.** Ieee 802.11-enabled wake-up radio system: Design and performance evaluation. *Electronics Letters,* 2014, vol. 50 (20), 1484-1486
- **H. ZHANG ; C. LI ; S. CHEN ; X. TAN ; N. YAN ; H. MIN.** A low-power ofdm-based wake-up mechanism for ioe applications. *IEEE Transactions on Circuits and Systems II: Express Briefs,* 2018, vol. 65 (2), 181-185
- **F. HUTU ; A. KHOUMERI ; G. VILLEMAUD ; J. M. GORCE.** Wake-up Radio Architecture for Home Wireless Networks. *Proc. of IEEE Radio and Wireless Symposium,* 2014
- **E. ALPMAN ; A. KHAIRI ; R. DORRANCE ; M. PARK ; V. SOMAYAZULU.** 802.11g/n Compliant Fully Integrated Wake-up Receiver with -72dBm Sensitivity in 14nm FinFET CMOS. *IEEE Journal of Solid-State Circuits,* May 2018, vol. 53 (5), 1411-1422
- Spectrum Efficient Support of IEEE 802.11ba in an IEEE 802.11ax Network. **L. R. WILHELMSSON ; M. M. LOPEZ.** 2019 IEEE 89th Vehicular Technology Conference. Spring, 2019, 1-5
- IEEE Standard for Information Technology-Telecommunications and Information Exchange Between Systems Local and Metropolitan Area Networks-Specific Requirements Part 11: Wireless LAN Medium Access Control (MAC) and Physical Layer (PHY) Specifications. *IEEE Standard 802.11-2016,* December 2016
- **A. SAHIN ; R. YANG ; X. WANG ; H. LOU ; F. LA SITA.** On the Coexistence of 802.11ax and 802.11ba Signals. *IEEE802.11-17/0659r1,* May 2017